# FASCICULE DE BREVET EUROPEEN

(11) **EP 4 001 840 B1**
(45) Date de publication et mention de la délivrance du brevet: **01.05.2024**
(21) Numéro de dépôt: 21209009.6
(22) Date de dépôt: 18.11.2021
(51) Int. Cl.: G01C 19/5747, G01C 19/5719

(54) **GYROMÈTRE RESISTANT AUX VIBRATIONS**
SCHWINGUNGSRESISTENTES GYROMETER
VIBRATION-RESISTANT GYROMETER

(30) Priorité: 20.11.2020 FR 2011962
(43) Date de publication de la demande: 25.05.2022
(73) Titulaire: Commissariat à l'Energie Atomique et aux Energies Alternatives, 75015 Paris (FR)
(72) Inventeur: JANIOUD, Pierre, 38054 GRENOBLE Cedex 09 (FR); JOURDAN, Guillaume, 38054 GRENOBLE Cedex 09 (FR); KOUMELA, Alexandra, 38054 GRENOBLE Cedex 09 (FR); POULAIN, Christophe, 38054 GRENOBLE Cedex 09 (FR)
(74) Mandataire: Cabinet Nony

(56) Documents cités:
- EP-A1- 2 430 397
- US-A1- 2012 125 099
- US-A1- 2018 172 447

## Description

### Domaine technique

La présente invention concerne un gyromètre sous forme d'un microsystème électromécanique (ou MEMS, de l'anglais « Micro Electro Mechanical System »), ou d'un nanosystème électromécanique (ou NEMS, de l'anglais « Nano Electro Mechanical System »). Dans la suite de la description, le terme « gyromètre » désigne un tel gyromètre MEMS ou NEMS.

### Etat de la technique

On distingue classiquement les gyroscopes, qui servent à mesurer l'amplitude d'une rotation (ou une position angulaire), et les gyromètres, qui servent à mesurer une vitesse de rotation. Bien que les gyromètres utilisent, comme les gyroscopes, la force de Coriolis, les problèmes qui se posent, et les solutions pour les résoudre sont généralement différents dans ces deux applications.

Les gyroscopes requièrent des temps de réponse des résonateurs extrêmement élevés pour pouvoir fonctionner en régime libre, sans excitations extérieures, pendant une durée typiquement supérieure à 30 s, ce qui impose un niveau de performance et de précision. En outre, un gyroscope doit posséder des axes de déplacement accordés finement les uns par rapport aux autres pour le mode d'excitation. En particulier, les masses d'inertie d'un gyroscope sont soumises à des raideurs kₓ et k_{y}, selon les deux axes x et y perpendiculaires du plan, qui doivent être rigoureusement identiques.

Les gyromètres MEMS constituent des systèmes mécaniques plus simples qui ne nécessitent qu'une seule direction d'excitation pour le mode d'excitation.

La demande US 2018/172447 A1 décrit un gyromètre dont les masses sont couplées entre elles par des bras pour contraindre deux masses inertielles adjacentes à adopter un mouvement linéaire en antiphase.

EP 2 600 104 divulgue un exemple de gyromètre à double masse (en anglais « dual mass »).

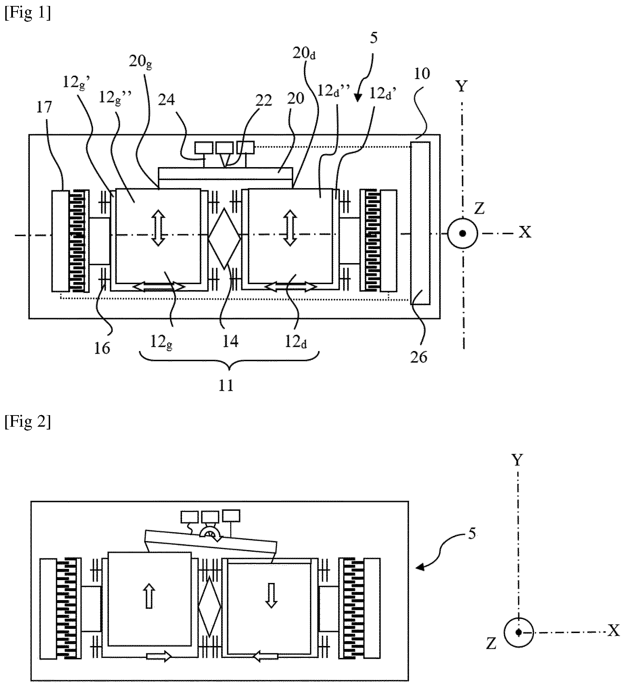

Comme représenté schématiquement sur la figure 1, un gyromètre à double masse 5 est une structure planaire, dont l'épaisseur est typiquement comprise entre 10 et 150 µm. Il comporte classiquement :
- un substrat 10, et
- une masse d'inertie 11, ou « masse inertielle », mobile par rapport au substrat.

La masse d'inertie 11 comporte elle-même des masses d'inertie « gauche » et « droite », référencées 12_{g} et 12_{d} respectivement, de préférence identiques, alignées parallèlement à une direction d'excitation X, ou « axe Drive ».

Chaque masse d'inertie 12_{g} et 12_{d} comporte un cadre, référencé 12_{g}' et 12_{d}', respectivement, qui coulisse, sur le substrat, sensiblement exclusivement parallèlement à la direction d'excitation X, et une masse centrale, référencée 12_{g}"et 12_{d}", respectivement, logée dans le cadre et qui coulisse, sur le cadre, sensiblement exclusivement parallèlement à une direction de détection, ou « axe Sense », perpendiculaire à la direction d'excitation X.

Chaque masse centrale peut ainsi se déplacer, par rapport au substrat, selon la direction de détection et selon la direction d'excitation. Les cadres oscillant selon la direction d'excitation, on dit également que les masses d'inertie gauche et droite oscillent selon la direction d'excitation.

Le gyromètre à double masse 5 peut alors servir à mesurer une vitesse de rotation autour d'un axe dit « de rotation » parallèle à une direction de rotation perpendiculaire aux directions d'excitation et de détection.

Sur les figures 1 à 3, la direction de détection est la direction Y, dans le plan du substrat 10, et la direction de rotation est la direction Z, perpendiculaire au substrat 10.

Sur les figures 8 et 9, la direction de détection est la direction Z, perpendiculaire au plan du substrat 10, et la direction de rotation est la direction Y, dans le plan du substrat 10. Les masses centrales gauche et droite, 12_{g}"et 12_{d}", se déplacent vers l'avant et l'arrière du plan de la feuille.

La masse d'inertie comporte également un ressort de couplage 14, interposé entre les cadres gauche 12_{g}' et droit 12_{d}'. Le ressort de couplage 14 peut lui-même être connecté au substrat.

Les cadres sont montés sur le substrat 10 par l'intermédiaire de ressorts de guidage 16.

Le gyromètre à double masse comporte encore un organe de transduction électromécanique, ou « actionneur » 17, par exemple un actionneur capacitif, assurant un mouvement oscillatoire des masses d'inertie gauche et droite selon la direction d'excitation X.

L'actionneur 17 est classiquement constitué de deux parties, la partie « gauche » agissant sur la masse d'inertie gauche et la partie « droite » agissant sur la masse d'inertie droite.

L'actionnement est classiquement produit par une force électrostatique, mais peut être aussi produit par une force piézoélectrique ou électro thermique, par exemple.

Classiquement, l'actionneur 17 mesure également l'amplitude des mouvements des masses d'inertie 12_{g} et 12_{d} selon la direction d'excitation X.

Le gyromètre comporte aussi des moyens pour mesurer les mouvements des masses centrales selon la direction de détection. Ces moyens comportent classiquement une bascule 20 apte à se déplacer en rotation sur le substrat, autour d'un pivot de bascule 22. Les extrémités gauche 20_{g} et droite 20_{d} de la bascule 20 sont respectivement reliées aux masses centrales gauche et droite, 12_{g}"et 12_{d}" respectivement, de manière à transmettre aux bras de la bascule les mouvements des masses centrales selon la direction de détection.

L'axe du pivot de bascule 22 peut être en particulier parallèle à la direction de rotation, comme dans le mode de réalisation des figures 1 à 3 ou 8 et 9.

La raideur du ressort de couplage 14 et des ressorts de guidage 16 est beaucoup plus faible selon la direction d'excitation X que selon la direction de détection, de sorte que le mouvement oscillatoire est sensiblement exclusivement selon la direction d'excitation X.

Les moyens pour mesurer les mouvements des masses centrales selon la direction de détection comportent encore un organe de transduction mécanique-électrique, ou « détecteur » 24, configuré pour mesurer la rotation de la bascule 20 autour du pivot de bascule 22. Le détecteur 24 peut être un détecteur capacitif ou un capteur piézorésistif, c'est-à-dire dont la capacité électrique ou la résistance électrique, respectivement, varie en fonction de la position angulaire de la bascule 20. Le détecteur 24 peut être également un capteur piézoélectrique.

Le gyromètre comporte aussi un module de commande 26 pour commander l'actionneur 17 et recevoir et analyser les signaux émis par le détecteur 24 et les signaux émis par l'actionneur 17 mesurant l'amplitude des mouvements des masses d'inertie 12_{g} et 12_{d} selon la direction d'excitation X.

Le module de commande 26 comporte de préférence un circuit à boucle de verrouillage de phase, ou PLL (en anglais, Phase-Locked Loop), pour commander l'actionneur 17 en fonction de l'amplitude des mouvements des masses d'inertie 12_{g} et 12_{d} selon la direction d'excitation X.

Un circuit à boucle de verrouillage de phase, bien connu de l'homme de l'art, comporte classiquement un comparateur de phase, un correcteur d'erreur, par exemple de type PID, un oscillateur accordable, et de manière optionnelle, des amplificateurs, des filtres en fréquence, des blocs à seuil pour limiter l'excursion de la commande et des composants de conditionnement de signal. Le traitement du signal peut se faire en partie par des blocs numériques.

EP 2 600 104, EP 2 520 940 et EP 2 211 143 fournissent d'autres détails sur la constitution d'un gyromètre à double masse.

En fonctionnement normal, et notamment en absence de vibrations extérieures, le mouvement oscillatoire des cadres des masses d'inertie gauche et droite parallèlement à la direction d'excitation est classiquement dans un mode dit « en opposition de phase », ou « en anti-phase », dans lequel les deux cadres se déplacent en opposition, se rapprochant ou s'écartant toujours simultanément du ressort de couplage, comme illustré sur la figure 2, à une fréquence de résonance « en opposition de phase ». Autrement dit, classiquement, l'actionneur 17 commande une oscillation des masses d'inertie à une fréquence sensiblement égale à la fréquence de résonance en opposition de phase.

Dans ce mode, le barycentre est théoriquement immobile, et le gyromètre peut être considéré comme « équilibré ». Il est alors peu sensible aux vibrations au voisinage de cette fréquence.

La fréquence de résonance en opposition de phase est de préférence supérieure à 10 kHz et inférieure à 100 kHz, une fréquence d'environ 20 kHz étant préférée pour un compromis optimal entre sensibilité et consommation énergétique.

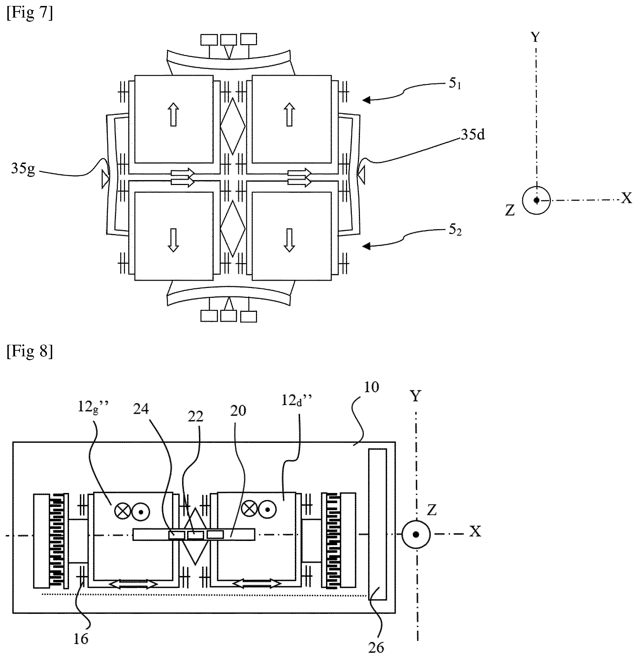

Lorsque le substrat est en rotation autour d'un axe parallèle à la direction de rotation (Z sur la figure 1 ou Y sur la figure 8), l'oscillation des masses d'inertie selon la direction d'excitation provoque des forces de Coriolis, proportionnelles à la vitesse de rotation autour de l'axe de rotation, et aux masses et vitesses des masses d'inertie sur lesquelles elles s'appliquent.

Le rapport de la masse d'une masse centrale sur la masse du cadre qui la reçoit est typiquement supérieur à 7, mais peut être inférieur à 7 sans que cela modifie la sensibilité du gyromètre de façon notable. En revanche, pour les masses centrales, la raideur selon la direction de détection est beaucoup plus faible que pour les cadres (au moins un facteur 10 entre les deux). La force de Coriolis agit sur les masses centrales et sur les cadres, mais produit donc un déplacement selon la direction de détection plus important pour les masses centrales.

La rotation du substrat autour de l'axe de rotation se traduit donc sensiblement exclusivement par un déplacement des masses centrales, parallèlement à la direction de détection, dans le repère des cadres.

Le sens de cette action dépend du sens de déplacement de la masse centrale selon la direction d'excitation. Le mouvement des cadres parallèlement à la direction d'excitation X et en opposition de phase se traduit donc par une oscillation des masses centrales, parallèlement à la direction de détection, une masse centrale « montant » quand l'autre « descend », comme illustré sur la figure 2.

Le bras de bascule peut être relié directement ou indirectement aux masses centrales. De préférence, une pièce intermédiaire, ou « piston de découplage », non représentée, est interposée entre chaque masse centrale et le bras de la bascule. Cette pièce intermédiaire est montée mobile sur le substrat, exclusivement en translation selon la direction de détection, et montée mobile sur la masse centrale, exclusivement en translation selon la direction d'excitation. Le mouvement de la masse centrale selon la direction de détection est ainsi entièrement transféré à cette pièce intermédiaire, mais pas le mouvement selon la direction d'excitation X. Le biais de mesure en est réduit.

Le signal fourni par le détecteur peut avantageusement être analysé pour évaluer la vitesse de rotation du substrat autour de l'axe de rotation.

Les masses centrales des masses d'inertie gauche et droite peuvent également osciller parallèlement à la direction de détection sous l'effet de vibrations extérieures.

Les masses centrales d'inertie gauche et droite possèdent un mode d'oscillation selon l'axe de détection, dans lequel les mouvements des deux masses sont opposés. La bascule qui couple les deux masses bloque naturellement leur mouvement en phase (ce mode est rejeté à plus haute fréquence > 100 kHz et a une amplitude beaucoup plus faible). Dans le mode de vibration en antiphase, le barycentre des masses est idéalement immobile : le mode est dit équilibré et est alors insensible aux vibrations extérieures par conception. Des défauts de fabrication peuvent néanmoins générer une sensibilité aux vibrations extérieures pour ce mode, mais dont les faibles effets pour des vibrations de 10 g permettent au gyromètre de rester dans un domaine de fonctionnement linéaire. Cette sensibilité résiduelle aux vibrations a lieu essentiellement au voisinage de la fréquence de résonance du mode mécanique de détection que l'on positionne généralement au-dessus de la fréquence de résonance du mode d'excitation en antiphase. Le processus de démodulation du signal de Coriolis qui a lieu à la fréquence de résonance du mode d'excitation an antiphase filtre néanmoins ce signal parasite de vibrations extérieures obtenu par ce processus, qui est par conséquent peu gênant pour le fonctionnement des gyromètres en milieu vibratoire.

On distingue le « mode accordé » et le « mode désaccordé ».

Dans le mode accordé, la fréquence de résonance de l'oscillation des masses d'inertie selon la direction d'excitation X est sensiblement identique à la fréquence de résonance de l'oscillation des masses centrales selon la direction de détection. Ces fréquences de résonance dépendent des raideurs selon les directions d'excitation et de détection, respectivement, mais aussi des masses m_{X} et m_{Y} déplacées suivant ces directions. m_{X} > m_{Y} car les cadres sont déplacés suivant la direction d'excitation, mais pas selon la direction de détection.

Dans le mode désaccordé, la fréquence de résonance selon la direction d'excitation X est différente de la fréquence de résonance selon la direction de détection. On souhaite en effet que les mouvements des masses centrales, selon la direction de détection, en réponse à l'oscillation des masses d'inertie suivant la direction d'excitation, soient les plus faibles possible, c'est-à-dire que la réponse mécanique soit la plus plate possible.

Les moyens d'accordement électrostatiques permettant de modifier le niveau d'accordement, en particulier pour obtenir le mode accordé, sont connus. L'article suivant décrit un gyromètre dans un mode accordé : Zaman MF, Sharma A, Hao Z, Ayazi F. A Mode-Matched Silicon-Yaw Tuning-Fork Gyroscope With Subdegree-Per-Hour Allan Déviation Bias Instability. Journal of Microelectromechanical Systems. 2008 Dec; 17(6): 1526-36.

Le mode accordé confère une sensibilité plus élevée, mais une bande passante plus étroite que le mode désaccordé. Dans le mode désaccordé, la réponse en fréquence est d'autant plus plate que la différence entre la fréquence de résonance selon la direction d'excitation X et la fréquence de résonance selon la direction de détection est grande.

Pour cela, la fréquence de résonance du mode selon l'axe de détection est préférentiellement supérieure à la fréquence de résonance du mode selon l'axe d'excitation.

En pratique, les défauts de fabrication peuvent réduire les performances du gyromètre, notamment lorsque le gyromètre est soumis à un environnement vibratoire sévère. En particulier, les défauts de fabrication (répartition de masse, largeur, profil des ressorts) peuvent déséquilibrer le gyromètre, en modifiant la position du barycentre de la masse d'inertie, rendant le mode en opposition de phase sensible aux vibrations extérieures autour de sa fréquence de résonance

Cette sensibilité aux vibrations extérieures a en particulier été étudiée dans l'article A. Koumela et al., "Resilience to Vibration of a Tuning Fork MEMS Gyroscope," Procedia Engineering, vol. 168, pp. 1725-1730, Jan. 2016. Cet article, ainsi que les articles « Tuning the Anti-Phase Mode Sensitivity to Vibrations of a MEMS Gyroscope» de Pierre Janioud et al., publié dans les Proceedings 2017, 1, 355; de Eurosensors 2017 - Paris (MDPI) décrivent différentes solutions pour réduire cette sensibilité.

Le mouvement oscillatoire des masses d'inertie gauche et droite parallèlement à la direction d'excitation X peut être également dans un mode dit « en phase », dans lequel les cadres oscillent à une fréquence de résonance « en phase » f_{Dp}, l'écartement entre les deux cadres étant constant.

Le mode en phase ne permet pas de maintenir la position du barycentre P immobile : le gyromètre est donc sensible aux vibrations extérieures au voisinage de la fréquence f_{Dp} : Ce mode est non équilibré.

L'amplitude du déplacement des masses d'inertie parallèlement à la direction d'excitation X peut augmenter jusqu'à ce que les mouvements produits par l'actionneur 17 et par les vibrations extérieures soient couplés ou jusqu'à ce que la course des masses d'inertie soit limitée par butée. Le mode en phase peut ainsi conduire les masses d'inertie dans un régime de déplacement non linéaire produit par les forces électrostatiques de l'actionneur 17 ou par la mise en butée avec le substrat. Il en résulte une erreur dans la mesure.

Pour répondre à l'ensemble des problèmes mentionnés ci-dessus, une solution consiste à configurer le gyromètre de manière que ses fréquences de résonance en phase et en opposition de phase selon la direction d'excitation soient supérieures à une fréquence seuil en dessous de laquelle on souhaite rendre la structure insensible aux vibrations extérieures. On cherche également à configurer le gyromètre pour que la fréquence de résonance en phase f_{Dp}, selon la direction d'excitation, soit la plus élevée possible, de manière qu'en service, elle soit atteinte le moins souvent possible en cas de vibrations extérieures.

Par exemple, l'article "100 kHz MEMS Vibratory Gyroscope," de J.-T. Liewald et al., publié dans le Journal of Microelectromechanical Systems, vol. 22, no. 5, pp. 1115-1125, Oct. 2013 propose une structure fonctionnant autour de 100 kHz. Cette structure a pour conséquence de monter les deux fréquences de résonance et ne permet pas de conserver une fréquence de résonance en antiphase basse.

L'augmentation des fréquences de résonance peut cependant conduire à une réduction de la sensibilité du gyromètre quand la fréquence de fonctionnement augmente.

Il existe donc un besoin permanent pour de nouvelles solutions pour améliorer la fiabilité d'un gyromètre dans un environnement vibratoire sévère, et en particulier dans un environnement dans lequel il est susceptible d'être soumis à des vibrations extérieures à une fréquence pouvant atteindre 40 kHz, avec des accélérations pouvant atteindre 10 g, « g » désignant l'accélération de la pesanteur standard égale à 9,80665 m/s².

Un objectif de la présente invention est de répondre, au moins partiellement, à ce besoin.

### Résumé de l'invention

L'invention propose un gyromètre comportant :
1) un premier gyromètre à double masse comportant
   - un substrat plan,
   - des premières masses d'inertie gauche et droite comportant :
      - des premiers cadres gauche et droit, respectivement, alignés selon un premier axe d'excitation X₁ parallèle à une direction d'excitation X, et montés coulissants sur le substrat suivant ledit premier axe d'excitation X₁, et
      - des premières masses centrales gauche et droite, respectivement, montées coulissantes dans les premiers cadres gauche et droit, respectivement, parallèlement à une première direction de détection perpendiculaire à la direction d'excitation ;
   - un premier actionneur de mise en oscillation, selon la direction d'excitation, des premières masses d'inertie gauche et droite, et du premier ressort de couplage ;
   - une première bascule montée en rotation sur le substrat autour d'un premier pivot de bascule, les extrémités gauche et droite de la première bascule étant reliées aux premières masses centrales gauche et droite, respectivement ; et
   - un premier détecteur de la position angulaire de la première bascule autour du premier pivot de bascule ;
2) des deuxièmes masses d'inertie gauche et droite alignées selon un deuxième axe X₂ parallèle à ladite direction d'excitation, et montées coulissantes sur le substrat suivant le deuxième axe X₂ ;
   le gyromètre comportant encore des bras gauche et droit, montés en rotation sur le substrat autour de pivots de bras gauche et de bras droit, respectivement, d'axes perpendiculaires au substrat,
   le bras gauche couplant mécaniquement le premier cadre gauche avec la deuxième masse d'inertie gauche, et le bras droit couplant mécaniquement le premier cadre droit avec la deuxième masse d'inertie droite,
   un premier ressort de couplage étant interposé entre lesdits premiers cadres gauche et droit et/ou un deuxième ressort de couplage étant interposé entre lesdites deuxièmes masses d'inertie gauche et droite.

Comme on le verra plus en détail dans la suite de la description, les inventeurs ont découvert qu'un tel couplage avec les bras droit et gauche permet avantageusement d'augmenter la fréquence de résonance en phase selon la direction d'excitation, de réduire la sensibilité en cas d'oscillation à cette fréquence, et de maintenir une fréquence de résonance en opposition de phase selon la direction d'excitation dans une gamme « basse fréquence », typiquement autour de 20 kHz.

Le couplage permet de repousser les fréquences de résonance en phase et en antiphase dans un domaine non concernée par les vibrations mécaniques extérieures. Typiquement, la fréquence de résonance en antiphase (utile) peut être maintenue autour de 20 kHz alors que la fréquence en antiphase est repoussée au-delà d'une fréquence de seuil typiquement d'environ 40-50 kHz.

Le couplage permet de sensiblement maintenir l'équilibre du gyromètre, même dans un environnement vibratoire sévère, par exemple à 40 kHz, sous 10 g.

Sans être liés par cette théorie, les inventeurs expliquent ce résultat par le maintien d'une immobilité ou d'une réduction de l'amplitude de déplacement du barycentre de l'ensemble des masses d'inertie du gyromètre dans tous les modes mécaniques, en particulier dans celui pour lequel les masses d'inertie gauche et droite oscillent en phase. Ce mode d'oscillation est avantageusement repoussé à une plus haute fréquence et présente une réponse en amplitude aux vibrations extérieures moindre.

En effet, le gyromètre demeure équilibré car, lorsque les premières masses d'inertie oscillent en phase, selon la direction d'excitation, les deuxièmes masses d'inertie oscillent également en phase, selon la direction d'excitation mais dans le sens contraire des premières masses d'inertie.

Un gyromètre selon l'invention présente de préférence une ou plusieurs des caractéristiques optionnelles suivantes :
- le gyromètre comporte un dit premier ressort de couplage et un dit deuxième ressort de couplage ;
- un deuxième ressort de couplage interposé entre lesdits deuxièmes masses d'inertie gauche et droite ;
- la première direction de détection est parallèle au plan du premier axe d'excitation X₁ et du deuxième axe X₂, ainsi qu'au plan du substrat ;
- la première masse d'inertie gauche est couplée mécaniquement avec la deuxième masse d'inertie gauche exclusivement au moyen du bras gauche ;
- la première masse d'inertie droite est couplée mécaniquement avec la deuxième masse d'inertie droite exclusivement au moyen du bras droit ;
- ledit premier détecteur comporte une jauge de contrainte piezorésistive ou une jauge capacitive, de préférence une jauge de contrainte piezorésistive ;
- ladite jauge comporte au moins un nanofil reliant la première bascule au substrat, la distance entre un point de connexion mécanique dudit nanofil à la première bascule et ledit premier pivot de bascule étant de préférence inférieure à 100 microns, de préférence comprise entre 0,1 et 30 microns ;
- le gyromètre comporte un capteur de la position angulaire d'au moins un des bras gauche et droit, ledit capteur étant de préférence une jauge de contrainte piezorésistive ou une jauge capacitive, de préférence une jauge de contrainte piezorésistive, et comportant de préférence au moins un nanofil reliant au substrat ledit bras, de préférence au moins deux nanofils reliant au substrat respectivement le bras gauche et le bras droit ;
- en particulier dans un mode de réalisation adapté au mode désaccordé, les bras gauche et droit sont conformés de manière que la fréquence de résonnance à laquelle l'ensemble des premières et deuxièmes masses d'inertie gauches oscille, selon la direction d'excitation, en opposition de phase avec l'ensemble des premières et deuxièmes masses d'inertie droites, est différente de l'une quelconque des fréquences de résonnance des premières masses centrales, selon la première direction de détection ;
- ladite différence étant de préférence supérieure à 1 kHz ;
- les bras gauche et droit sont conformés de manière que la fréquence de résonance à laquelle l'ensemble des premières et deuxièmes masses d'inertie gauches oscille, selon la direction d'excitation, en opposition de phase avec l'ensemble des premières et deuxièmes masses d'inertie droites, est différente de
   - l'une quelconque des fréquences de résonance des premières masses centrales, selon la première direction de détection, et/ou
   - l'une quelconque des fréquences de résonance des deuxièmes masses centrales, selon la deuxième direction de détection,
   ladite différence étant de préférence supérieure à 1 kHz ;
- la position du pivot de bras droit le long du bras droit est déterminée de manière que les moments de force exercés par la gravité, orientée selon la direction d'excitation, sur le bras droit par les première et deuxième masses d'inertie droites autour du pivot de bras droit se compensent mutuellement, c'est-à-dire que ces moments de force soient sensiblement identiques lorsque le bras droit, à l'horizontal, repose sur le pivot de bras droit ;
- les bras gauche et droit sont identiques ;
- le bras gauche et/ou le bras droit présente(nt) une longueur supérieure à 100 microns, de préférence supérieure à 200 microns, et/ou inférieure à 2000 microns, de préférence inférieure à 1500 microns, de préférence comprise entre 600 et 800 microns ;
- le bras gauche et/ou le bras droit présente(nt) une largeur supérieure à 10 microns, de préférence supérieure à 15 microns, et/ou inférieure à 50 microns, de préférence inférieure à 40 microns ;
- le bras gauche et/ou le bras droit présente(nt) un rapport de forme (longueur/largeur) supérieur à 5, de préférence supérieur à 10, et/ou inférieur à 30, de préférence inférieur à 20 ;
- les première et deuxième masses d'inertie gauches sont alignées selon un axe de détection gauche parallèle à la première direction de détection,
   les première et deuxième masses d'inertie droites sont alignées selon un axe de détection parallèle à la deuxième direction de détection, et
   lesdits premier et deuxième axes d'excitation et lesdits axes de détection gauche et droit s'étendent dans un même plan perpendiculaire à la direction de rotation ;
- le gyromètre comporte un deuxième gyromètre à double masse comportant :
   - ledit substrat,
   - lesdites deuxièmes masses d'inertie gauche et droite, lesdites deuxièmes masses d'inertie gauche et droite comportant :
      - des deuxièmes cadres gauche et droit, respectivement, alignés selon le deuxième axe, dit « deuxième axe d'excitation » X₂, et montés coulissants sur le substrat suivant le deuxième axe d'excitation X₂, et
      - des deuxièmes masses centrales gauche et droite, respectivement, montées coulissantes dans les deuxièmes cadres gauche et droit, respectivement, parallèlement à une deuxième direction de détection, identique ou différente de la première direction de détection ;
   - ledit deuxième ressort de couplage, interposé entre lesdits deuxièmes cadres gauche et droit ;
   - un deuxième actionneur de mise en oscillation, selon la direction d'excitation X, des deuxièmes masses d'inertie gauche et droite, et du deuxième ressort de couplage, le deuxième actionneur étant identique ou différent du premier actionneur ;
   - une deuxième bascule montée en rotation sur le substrat autour d'un deuxième pivot de bascule, les extrémités gauche et droite de la deuxième bascule étant reliées aux deuxièmes masses centrales gauche et droite, respectivement ; et
   - un deuxième détecteur de la position angulaire de la deuxième bascule autour du deuxième pivot de bascule ;
- le deuxième gyromètre à double masse est identique au premier gyromètre à double masse ;
- le bras gauche est monté en rotation sur les premier et deuxième cadres gauches, autour de premier et deuxième axes de rotation gauches perpendiculaires à la direction d'excitation, respectivement ;
- le bras droit est monté en rotation sur les premier et deuxième cadres droits, autour de premier et deuxième axes de rotation droits perpendiculaires à la direction d'excitation, respectivement ;
- le gyromètre comporte un module de commande comportant un circuit à boucle de verrouillage de phase configuré pour commander les premier et deuxième actionneurs ;
- les première et deuxième directions de détection sont identiques,
   le premier détecteur est configuré pour fournir une première mesure d'une rotation de la première bascule autour du premier pivot de bascule,
   le deuxième détecteur est configuré pour fournir une deuxième mesure d'une rotation de la deuxième bascule autour du deuxième pivot de bascule,
   le gyromètre comportant un module configuré pour fournir un signal en fonction des première et deuxième mesures ;
- chacun des premier et deuxième détecteurs comporte une jauge de contrainte, de préférence piezorésistive ;
- dans un mode de réalisation, chacune des deuxièmes masses d'inertie gauche et droite est monobloc ;
- le gyromètre comporte
   - plusieurs ensembles comportant chacun desdites deuxièmes masses d'inertie gauche et droite respectives, alignées selon un dit deuxième axe respectif, parallèle à ladite direction d'excitation, et montées coulissantes sur le substrat suivant ledit deuxième axe respectif; et
   - pour chaque dit ensemble, des bras gauche et droit respectifs, montés en rotation sur le substrat autour de pivots de bras gauche et de bras droit, respectivement, d'axes perpendiculaires au substrat,
   le bras gauche couplant mécaniquement le premier cadre gauche avec la deuxième masse d'inertie gauche respective, et le bras droit couplant mécaniquement le premier cadre droit avec la deuxième masse d'inertie droite respective ;
- pour chaque dit ensemble, chacune des deuxièmes masses d'inertie gauche et droite est monobloc.

L'invention concerne enfin l'utilisation d'un gyromètre selon l'invention dans un environnement dans lequel il est susceptible d'être soumis à des vibrations extérieures jusqu'à une fréquence de 40 kHz, sous 10 g, en particulier dans une automobile, une machine outil ou dans une station inertielle en environnement de vibration.

L'invention concerne en particulier l'utilisation d'un gyromètre selon l'invention dans un environnement dans lequel il est susceptible d'être soumis à des vibrations extérieures dans la gamme 15-40 kHz à partir de 0,01 g, voire à partir de 0,001 g.

### Définitions

On considère qu'un axe (ou une direction) est perpendiculaire à un autre axe (ou direction) lorsque des plans perpendiculaires à ces axes (ou directions) sont perpendiculaires entre eux.

Un nanofil est un fil dont le diamètre équivalent est inférieur à 1 micron.

La « fréquence de fonctionnement » est la fréquence à laquelle les masses d'inertie sont mises en mouvement par l'actionneur pour rendre le gyromètre opérationnel. Cette fréquence est égale ou proche de la fréquence de résonance du mode mécanique en antiphase selon l'axe d'excitation. En l'absence de vibrations extérieures, cette fréquence est la fréquence imposée par l'actionneur. Le signal d'excitation imposé par l'actionneur peut classiquement être modifié pour adapter le fonctionnement du gyromètre à un environnement particulier. Le mouvement peut être modifié sous l'effet de vibrations extérieures et corrigé par une boucle à verrouillage de phase pour réguler les oscillations à un niveau d'amplitude et une fréquence donnés.

Un « mode mécanique » est caractérisé par une distribution de la déformation d'une structure, pondérée par une même amplitude d'oscillation, l'ensemble décrivant alors son mouvement. Cette distribution de déformation est invariante lorsque la structure mécanique évolue librement suite à une sollicitation du système dans ce mode mécanique seul. Il est également caractérisé par une fréquence de résonance pour laquelle l'amplitude d'oscillation est maximale pour une force d'excitation donnée.

Le « mode d'excitation en antiphase » correspond à un mode mécanique dans lequel les masses inertielles se déplacent en opposition de phase selon l'axe d'excitation.

Le « mode d'excitation en phase » correspond à un mode mécanique dans lequel les masses inertielles se déplacent en phase selon l'axe d'excitation.

"Comprendre", "comporter" et "présenter" doivent être interprétés de manière large et non limitative, sauf indication contraire.

Les adjectifs « premier », « deuxième », « gauche », ou « droite » sont utilisés à des fins de clarté.

### Brève description des figures

D'autres caractéristiques et avantages de l'invention apparaîtront encore à la lecture de la description détaillée qui va suivre et à l'examen du dessin annexé, fourni à des fins illustratives seulement, dans lequel :
- [Fig 1] la figure 1 représente, schématiquement, vu de dessus, un gyromètre à double masse ;
- [Fig 2] la figure 2 illustre le fonctionnement normal du gyromètre de la figure 1, lorsque le substrat est en rotation autour d'un axe de rotation orienté selon la direction Z ;

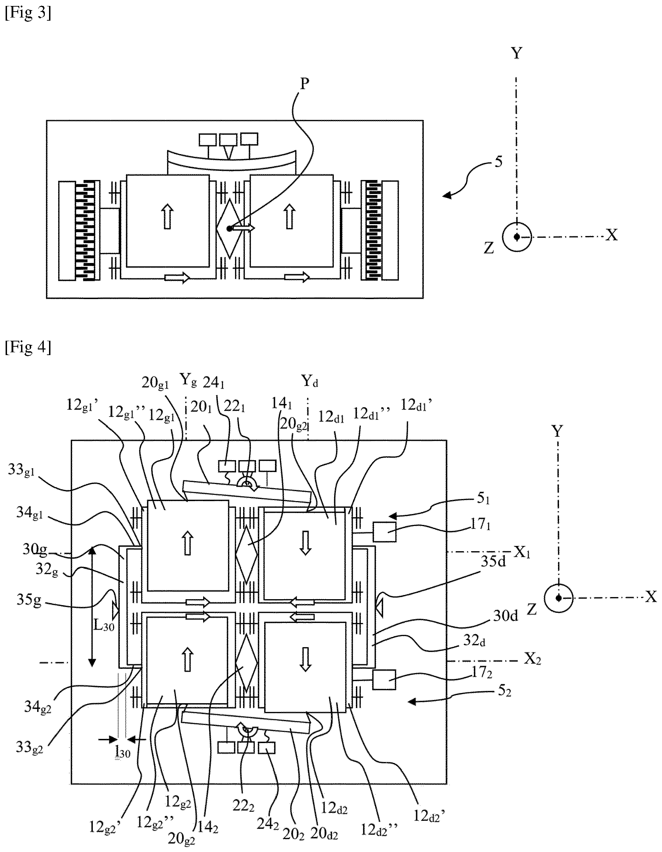

- [Fig 3] la figure 3 illustre un fonctionnement déséquilibré du gyromètre de la figure 1, lorsqu'il est en rotation autour d'un axe de rotation orienté selon la direction Z ;

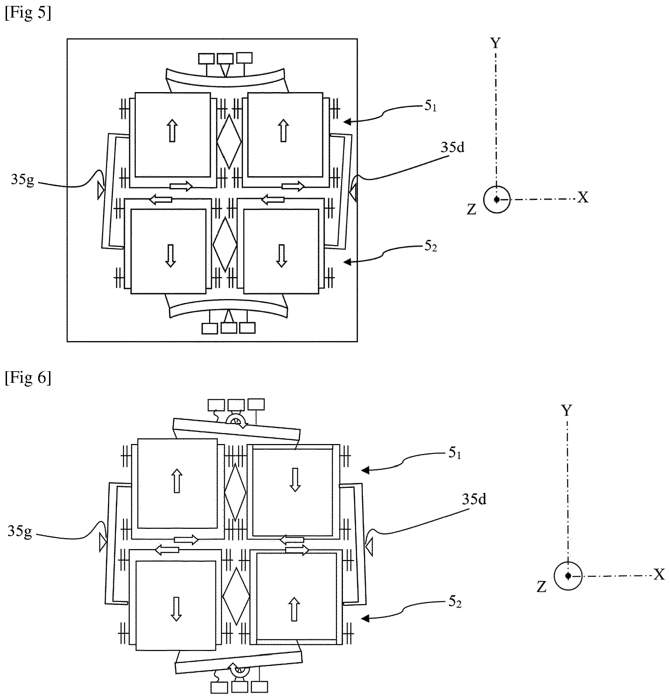

- [Fig 4], [Fig 5], [Fig 6], [Fig 7] les figures 4 à 7 représentent, schématiquement, vu de dessus, un gyromètre selon l'invention actionnés selon les 4 modes mécaniques d'excitation principaux ;

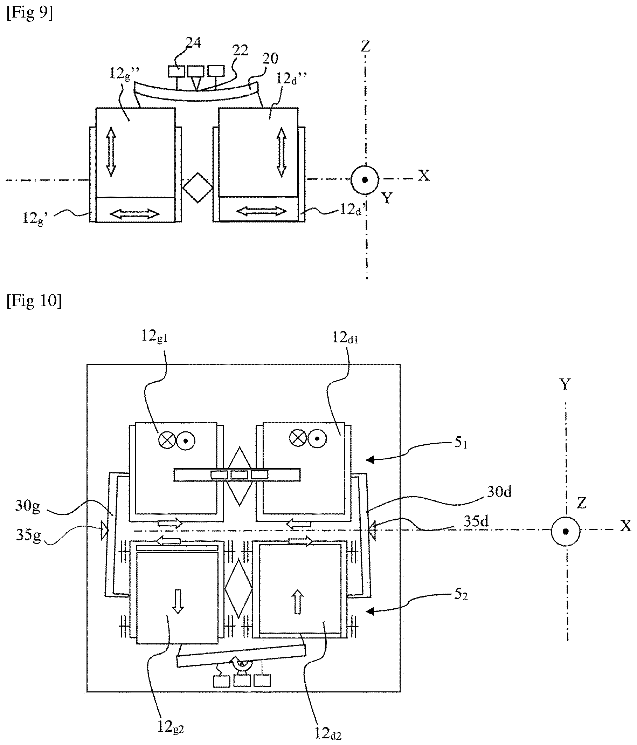

- [Fig 8], [Fig 9] les figures 8 et 9 représentent, schématiquement, vue de dessus et de face, une variante d'un gyromètre à double masse, la figure 9 ne représentant que partiellement le gyromètre de la figure 8 ;
- [Fig 10] la figure 10 représente, schématiquement, vu de dessus, un gyromètre selon l'invention « à deux axes » ;

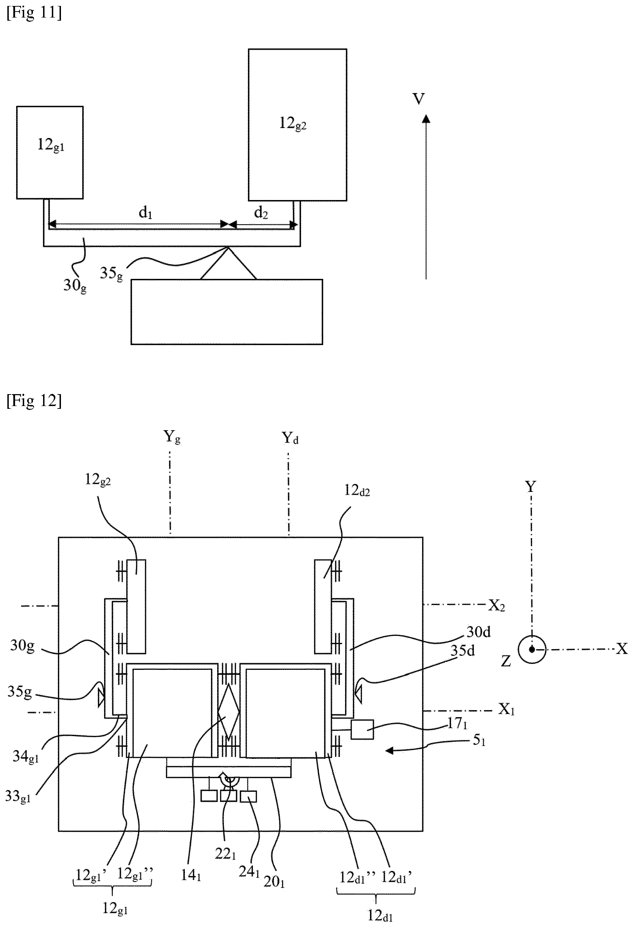

- [Fig 11] la figure 11 illustre le positionnement des pivots de bras
- [Fig 12] la figure 12 représente schématiquement, vu de dessus, un gyromètre selon l'invention, dans un mode de réalisation dans lequel les deuxièmes masses d'inertie sont des masses monoblocs ;

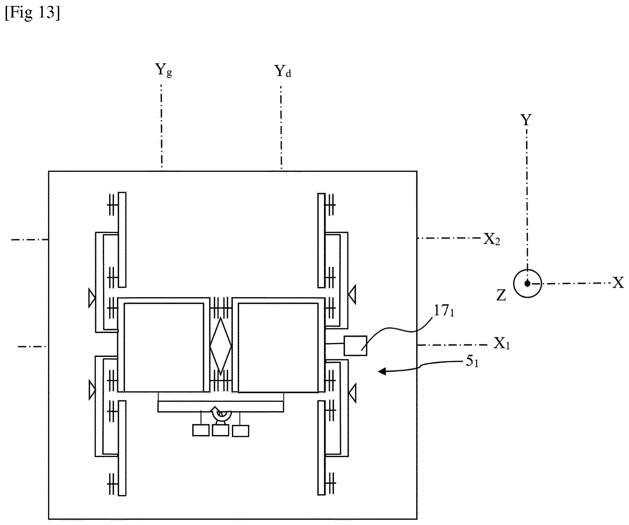

- [Fig 13] la figure 13 représente schématiquement, vu de dessus, un gyromètre selon l'invention, dans un mode de réalisation dans lequel le gyromètre comporte plusieurs ensembles de deuxièmes masses d'inertie gauche et droite monoblocs ;

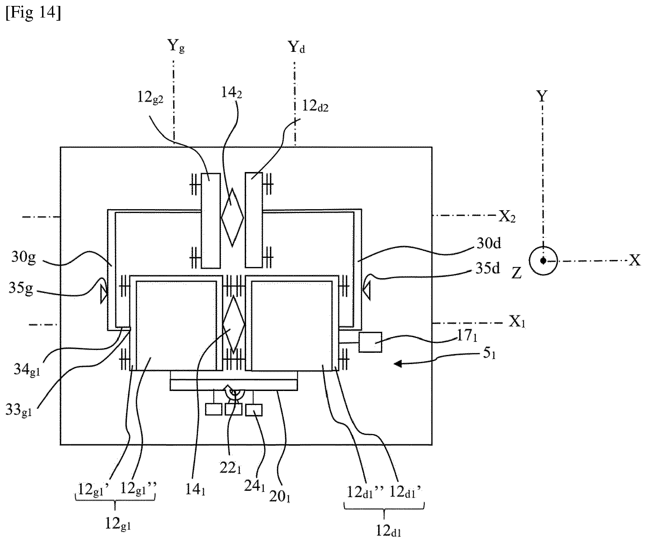

- [Fig 14] la figure 14 représente schématiquement, vu de dessus, un gyromètre selon l'invention, dans un mode de réalisation dans lequel les deuxièmes masses d'inertie sont des masses monobloc couplées par un ressort de couplage ;

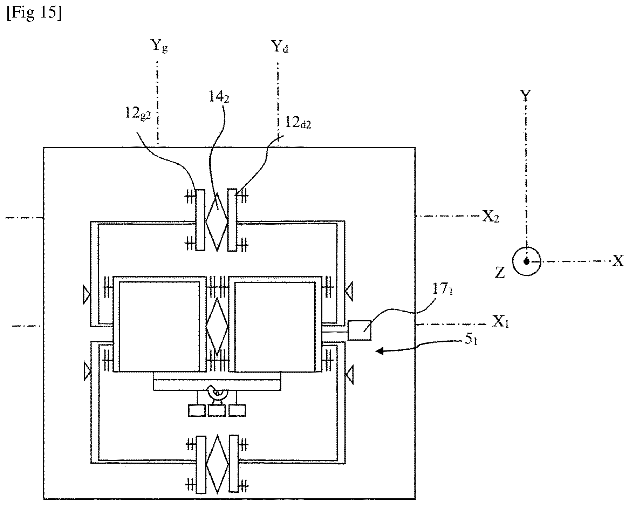

- [Fig 15] la figure 15 représente schématiquement, vu de dessus, un gyromètre selon l'invention, dans un mode de réalisation dans lequel le gyromètre comporte plusieurs ensembles de deuxièmes masses d'inertie gauche et droite monoblocs couplées par un ressort de couplage respectif.

Dans un souci de clarté, les premier et deuxième gyromètres à double masse d'un gyromètre selon l'invention n'ont été représentés que partiellement.

Dans les différentes figures, des références identiques sont utilisées pour désigner des organes identiques ou analogues.

### Description détaillée

Les figures 1 à 3 ayant été décrites en préambule, on se reporte à la figure 4.

Un gyromètre selon l'invention comporte des premier et deuxième gyromètres à double masse, référencés 5₁ et 5₂, respectivement, identiques ou différents. Des premier et deuxième gyromètres à double masse différents sont avantageux pour disposer d'un gyromètre « à deux axes ».

### Gyromètre à un axe

Un gyromètre à un axe n'est qu'apte à mesurer des vitesses de rotation autour d'axes de rotation parallèles à une direction prédéfinie.

Les figures 1 à 7 sont relatives à un gyromètre à un axe qui n'est qu'apte à mesurer des vitesses de rotation autour d'axes de rotation parallèles à la direction Z.

Les gyromètres à double masse 5₁ et 5₂ sont similaires à celui décrit dans le préambule. Sauf indication contraire, la description du gyromètre à double masse du préambule est donc applicable à chacun des premier et deuxième gyromètres à double masse d'un gyromètre selon l'invention.

Dans un souci de clarté, les mêmes références sont utilisées pour chacun des gyromètres à double masse, les références des premier et deuxième gyromètres à double masse étant cependant affectés d'un indice « 1 » ou « 2 », respectivement. Les organes sont également désignés de la même façon, les désignations des organes des premier et deuxième gyromètres à double masse étant cependant qualifiées de « premier » ou « deuxième », respectivement.

Comme représenté sur la figure 4, les premier et deuxième gyromètres à double masse 5₁ et 5₂ sont disposés sur un substrat commun 10 plan, côte à côte, selon des premier et deuxième axes d'excitation X₁ et X₂ parallèles. Les premier et deuxième gyromètres à double masse 5₁ et 5₂ sont disposés tête-bêche, les premiers cadres gauche et droit faisant face aux deuxième cadres gauche et droit, respectivement. Autrement dit, les première et deuxième bascules 20₁ et 20₂ sont orientées vers l'extérieur du gyromètre.

Alternativement, les premier et deuxième gyromètres à double masse 5₁ et 5₂ peuvent être orientés l'un vers l'autre, les première et deuxième bascules 20₁ et 20₂ se faisant face et les deuxième cadres gauche et droit débouchant vers l'intérieur du gyromètre.

Selon l'invention, le gyromètre comporte des bras gauche 30g et droit 30d, le bras gauche couplant mécaniquement la première masse d'inertie gauche 12_{g1} avec la deuxième masse d'inertie gauche 12_{g2}, et le bras droit couplant mécaniquement la première masse d'inertie droite 12_{d1} avec la deuxième masse d'inertie droite 12_{d2}.

Les bras gauche et droit sont de préférence identiques. Ils sont de préférence couplés de la même façon aux masses d'inertie qu'ils relient. Seul le bras gauche et son agencement sont donc décrits ci-après, cette description étant applicable au bras droit.

Le bras gauche comporte des première et deuxième extrémités, montées en rotation sur les premier et deuxième cadres gauches 12_{g1}' et 12_{g2}', respectivement, autour de pivots de doigt 33_{g1} et 33_{g2}, respectivement, parallèles à la direction Z. Un montage en rotation peut être obtenu, par exemple, par une réduction locale de matière ou par une modification locale de la nature de la matière du doigt.

De préférence, le bras gauche comporte une tige gauche 32g et deux doigts gauches 34_{g1} et 34_{g2}, connectés aux premier et deuxième cadres gauches 12_{g1}' et 12_{g2}', respectivement.

Les deux doigts gauches font saillie de la tige gauche, à la manière d'une fourche. Le bras gauche présente ainsi la forme générale d'un U très aplati.

Les pivots de doigt 33_{g1} et 33_{g2} résultent de préférence d'une réduction locale de matière des doigts gauches 34_{g1} et 34_{g2}, suivant la direction d'excitation X. Avantageusement, une telle réduction locale de matière confère également une raideur transverse, selon la direction de détection Y, plus faible que la raideur selon la direction d'excitation X.

La tige gauche 32g est montée en rotation autour d'un pivot de bras gauche 35g rigidement solidaire du substrat 10 et orienté perpendiculairement au substrat. De préférence, le pivot de bras gauche 35g n'autorise qu'une rotation autour d'un axe perpendiculaire au plan du substrat.

La raideur en torsion autour du pivot de bras gauche est faible.

L'apport de raideur mécanique pour les masses inertielles selon l'axe d'excitation doit être négligeable devant la raideur des ressorts de guidage16.

Cette liaison pivot avec le substrat confère à la tige gauche 32g un seul degré de liberté, en rotation autour de l'axe dudit pivot de bras gauche 35g. Les mouvements, selon la direction d'excitation, des premier et deuxième cadres gauches sont donc opposés. Le mouvement en phase de ces deux masses est quasiment bloqué. Il peut cependant être observé avec une très faible amplitude et pour un mode de vibration repoussé à des fréquences plus élevées (>40-50 kHz) que la fréquence de fonctionnement.

La position du pivot de bras gauche 35g le long de la tige gauche 32g est déterminée de manière que les moments de force exercés par la gravité (dirigée selon l'axe d'excitation) sur le bras gauche par les première et deuxième masses d'inertie gauche autour du pivot de bras gauche 35g se compensent mutuellement.

La figure 11 illustre comment les moments de force sont évalués. Dans le mode de réalisation illustré, la masse m₂ de la deuxième masse d'inertie gauche 12_{g2} est supérieure à la masse m₁ de la première masse d'inertie gauche 12_{g1}. V est la direction verticale et est orientée vers le haut. Les moments de force exercés par les masses m₁ et m₂ sont donc m₁.d₁ et m₂.d₂ et la position du pivot de bras gauche 35g est déterminée pour que ces moments soient de même amplitude et opposés l'un à l'autre.

Si m₁ et m₂ sont égales, le pivot de bras gauche 35g est donc à mi-longueur du bras gauche.

La position du pivot de bras gauche 35_{g} le long du bras gauche est ainsi de préférence déterminée de manière que les moments de force exercés par la gravité sur le bras gauche par les première et deuxième masses d'inertie gauche autour du pivot de bras gauche 35_{g} soient sensiblement identiques lorsque le bras gauche, à l'horizontal, repose sur le pivot de bras gauche 35_{g}, et la position du pivot de bras droit 35_{d} le long du bras droit est de préférence déterminée de manière que les moments de force exercés par la gravité sur le bras droit par les première et deuxième masses d'inertie droit autour du pivot de bras droit 35_{d} soient sensiblement identiques lorsque le bras droit, à l'horizontal, repose sur le pivot de bras droit 35_{d}.

Lesdites réductions locales des doigts gauches 34_{g1} et 34_{g2} facilitent le mouvement de rotation de la tige gauche 32g autour du pivot de bras gauche 35g.

Les doigts gauches 34_{g1} et 34_{g2} présentent une raideur élevée selon la direction d'excitation X, relativement aux raideurs équivalentes, selon cette direction, des ressorts de guidage et du pivot de bras gauche 35g. Cette raideur des doigts gauches 34_{g1} et 34_{g2} s'oppose aux mouvements des masses d'inertie gauches selon cette direction.

Les doigts gauches 34_{g1} et 34_{g2} ont une raideur en torsion, autour d'un axe parallèle à la direction Z, inférieure ou égale à celle du pivot de bras gauche 35g.

Comme représenté sur les figures 4 à 7, la tige est de préférence sensiblement indéformable en service.

La rigidité conférée par le bras gauche permet avantageusement d'opposer les forces résultant des vibrations extérieures et qui s'exercent sur les première et deuxième masses d'inertie gauche 12_{g1} et 12_{g2}.

Le bras gauche est de préférence en un matériau choisi parmi le Silicium Si, SiN, SiC, quartz, et plus généralement en tout matériau utilisé pour réaliser des structures MEMS.

Le bras gauche présente de préférence une longueur L₃₀ supérieure à 100 microns, de préférence supérieure à 200 microns, de préférence supérieure à 300 microns, de préférence supérieure à 400 microns, et/ou inférieure à 2000 microns, de préférence inférieure à 800 microns.

Le bras gauche présente de préférence une largeur l₃₀ supérieure à 5 microns, de préférence supérieure à 10 microns, de préférence supérieure à 15 microns, et/ou inférieure à 50 microns, de préférence inférieure à 40 microns.

Le rapport de forme de la section transversale de la tige du bras gauche, c'est-à-dire le rapport longueur L₃₀ / largeur l₃₀, est de préférence inférieur à 30.

L'épaisseur du bras gauche, mesurée selon la direction Z, lorsqu'elle est identique à celle des masses inertielles, a peu d'effet sur le comportement du bras gauche. De préférence, l'épaisseur du bras est supérieure à 5 µm, l'épaisseur maximale du bras étant en pratique déterminée par l'épaisseur du substrat.

La section transversale de la tige, c'est-à-dire dans un plan perpendiculaire à sa longueur, peut être quelconque, par exemple rectangulaire ou ovale.

La forme du bras gauche n'est pas limitative.

Le comportement du gyromètre dépend de la raideur générée par la présence des pivots de bras droit et gauche, des bras gauche et droit et de leur masse. L'homme de l'art sait cependant modifier cette raideur, en particulier en modifiant le matériau constitutif des bras, ou leurs dimensions, par exemple la largeur des tiges des bras, et la forme de leurs sections transversales. En pratique, la raideur peut être modifiée en ajustant les caractéristiques des pivots de doigt et de bras.

La masse des bras gauche et droit augmente l'inertie du mode mécanique d'excitation : cela peut entrainer une légère baisse de sa fréquence de résonance. Ce phénomène peut être minimisée si besoin en jouant sur la forme et le matériau afin d'obtenir des caractéristiques de rigidité convenables pour la structure.

De simples essais permettent de vérifier le comportement du gyromètre avec une forme de bras déterminée. Ces essais, qui peuvent être par exemple simulés par la méthode des éléments finis, permettent d'identifier les modes de vibration non équilibrés et d'évaluer leurs fréquences de résonance.

La plus petite fréquence de résonance des modes mécaniques non équilibrés permet de déterminer la limite haute de la bande de fréquences, ou « bande passante », à l'intérieur de laquelle le gyromètre est sensiblement insensible aux vibrations extérieures, dans la limite d'une amplitude de vibrations donnée (par exemple 10g).

De tels essais ont montré que les caractéristiques préférées ci-dessus permettent avantageusement de proposer des modes mécaniques équilibrés jusqu'à des fréquences de vibrations extérieures très élevées.

De préférence, les bras sont conformés pour maintenir cet équilibre jusqu'à des fréquences de vibrations extérieures supérieures à 30 kHz, de préférence supérieures à 40 kHz.

La raideur des bras influence les fréquences de résonance selon la direction d'excitation X.

Le couplage mécanique assuré par les bras fait que deux masses adjacentes prises parmi les premières masses et deuxième masses d'inertie oscillent en opposition de phase deux à deux selon la direction d'excitation X à une même fréquence de résonance f_{Da} sensiblement égales aux fréquences de résonance f_{Da1} et f_{Da2} , eux-mêmes égales pour des première et deuxième gyromètres identiques. Les fréquences de résonance des modes non équilibrés sont avantageusement repoussées au-dessus de 45 kHz dans les simulations. Dans le cas où les premiers et deuxième gyromètres ne sont pas identiques, une fréquence de résonance en antiphase selon l'axe d'excitation apparaît dans une gamme de fréquences intermédiaires (f_{Da1} et f_{Da2}).

Les bras gauche et droit ont un effet sensiblement nul sur le mode de vibration des masses centrales selon la direction de détection.

Pour le mode désaccordé, les bras sont de préférence conformés de manière à ce que la différence entre la fréquence de résonance f_{Da} selon la direction d'excitation X, dans le mode d'oscillation en opposition de phase, et
- l'une quelconque des fréquences de résonance des premières masses centrales, selon la direction de détection, et/ou
- l'une quelconque des fréquences de résonance des deuxièmes masses centrales, selon la direction de détection,
soit supérieure à 1 kHz.

Avantageusement, la largeur de la bande passante en est accrue.

Cette caractéristique du gyromètre selon l'invention le distingue en particulier des gyroscopes, pour lesquels on recherche classiquement une différence minimale, de préférence nulle, entre les fréquences de résonance selon la direction d'excitation et selon la direction de détection.

De préférence encore, les bras sont conformés de manière à ce que la fréquence de résonance f_{Da} selon la direction d'excitation X, dans le mode d'oscillation en opposition de phase, soit inférieure à l'une quelconque des fréquences de résonance selon la direction de détection. Ce mode de réalisation est particulièrement avantageux pour le mode désaccordé.

De préférence, le bras gauche est le seul moyen de couplage entre la première masse d'inertie gauche et la deuxième masse d'inertie gauche. En particulier, il n'existe pas de ressort de couplage interposé entre les premier et deuxième cadres gauches.

Avantageusement, le couplage avec le seul bras gauche est relativement simple à réaliser.

En outre, le contrôle des premier et deuxième gyromètres à double masse en est simplifié.

Par ailleurs, les mouvements des masses d'inertie des premier et deuxième gyromètres à double masse, entrainées par au moins un actionneur 17, par exemple par les premier et deuxième actionneurs 17₁ et 17₂ représentés symboliquement (et uniquement sur la figure 4, à des fins de clarté), sont couplés grâce aux bras et aux ressorts de couplage. Un unique actionneur peut donc être utilisé pour activer un mode de vibration souhaité.

De préférence, les premier et deuxième actionneurs 17₁ et 17₂ comportent chacun un capteur de mesure de l'amplitude des mouvements, selon la direction d'excitation X, des premières masses d'inertie gauche et droite, et des deuxièmes masses d'inertie gauche et droite, respectivement, de préférence un capteur de mesure piezorésistif ou capacitif, de préférence piezorésistif.

Pour un gyromètre à un axe, les mesures que les premier et deuxième détecteurs 24₁ et 24₂ fournissent peuvent être avantageusement comparées l'une à l'autre, de préférence par un module de commande 26 commun aux deux gyromètres à double masse, en particulier pour vérifier leur cohérence. En particulier, si la différence entre ces mesures dépasse un seuil prédéterminé, le module de commande 26 peut considérer qu'au moins une des mesures est erronée, et, de préférence, émettre une alerte en conséquence.

Enfin, pour un gyromètre à un axe, l'acquisition de deux mesures peut être utilisée pour augmenter la sensibilité du gyromètre.

De préférence, les premier et deuxième détecteurs 24₁ et 24₂ comportent des premier et deuxième capteurs de la position angulaire des première et deuxième bascule, respectivement. Ces capteurs sont de préférence des première et deuxième jauges de contrainte piezorésistives. Ces jauges sont disposées de manière à se déformer sous l'effet du mouvement des première et deuxième bascules 20₁ et 20₂, respectivement.

De telles jauges se sont avérées particulièrement fiables. En particulier, de manière inexpliquée, les inventeurs ont constaté qu'elles permettent des mesures plus fiables que les jauges capacitives en présence de vibrations extérieures.

D'autres organes de transduction, par exemple des jauges capacitives, sont cependant également envisagés.

Une jauge est de préférence fixée sur au moins une des première et deuxième bascules 20₁ et 20₂, de préférence, pour augmenter la symétrie du gyromètre et donc son équilibre, sur chacune des première et deuxième bascules 20₁ et 20₂. Les mesures fournies par les jauges et par l'actionneur 17 pour mesurer l'amplitude des mouvements des masses d'inertie 12_{g} et 12_{d} selon la direction d'excitation X sont de préférence traitées par le même module de commande 26.

Des jauges constituées en partie ou en totalité de métal, de préférence en aluminium ou en platine, peuvent être aussi utilisées. De préférence, les jauges sont en silicium dopé p ou n, ce matériau conférant un effet piézorésistif particulièrement élevé (coefficient de jauge de 50 pour un dopage de quelques 10¹⁹ cm⁻³, à comparer à un coefficient de jauge de quelques unités pour les métaux). D'autres semi-conducteurs dopés comme le germanium peuvent être envisagés.

De préférence, ces jauges comportent des nanofils piézorésistifs reliant les première et deuxième bascules 20₁ et 20₂ à des points d'ancrage respectifs, fixes par rapport au substrat 10. Un mouvement de bascule d'une bascule modifie ainsi la longueur des nanofils, et donc la résistance des nanofils. La mesure de cette résistance permet ainsi d'évaluer la position angulaire de la bascule autour de son pivot de bascule.

De préférence, un détecteur d'une bascule, de préférence d'une bascule quelconque, comporte deux dits nanofils, disposés chacun d'un côté respectif du pivot de bascule de ladite bascule, de sorte qu'un mouvement de bascule exerçant une force de traction sur un desdits nanofils exerce simultanément une action de compression sur l'autre desdits nanofils.

De préférence, la distance entre le pivot de bascule et l'un quelconque desdits nanofils est inférieure à 100 µm, inférieure à 60 µm, ou inférieure à 40 µm, et/ou supérieure à 1 µm, supérieure à 10 µm, supérieure à 20 µm, ou supérieure à 30 µm. Elle est de préférence utilisée pour ajuster la fréquence de résonance selon la direction de détection. L'effet des nanofils sur la raideur selon cette direction est en effet prédominant. Une faible force exercée, aux extrémités de la bascule, par les masses centrales, peut ainsi se traduire par une force de traction ou de compression élevée sur les nanofils par l'effet de bras de levier.

Les jauges peuvent être également, par exemple, capacitives.

Dans un mode de réalisation, le gyromètre comporte un capteur de la position angulaire d'au moins un des bras gauche et droit. Ledit capteur est de préférence une jauge de contrainte piezorésistive ou une jauge capacitive, de préférence une jauge de contrainte piezorésistive. Les jauges de contraintes décrites précédemment peuvent être utilisées.

Le capteur comporte de préférence au moins un nanofil (non représenté sur les figures), reliant au substrat ledit bras, de préférence au moins des nanofils gauche et droit reliant au substrat le bras gauche et le bras droit, respectivement.

Le capteur de la position angulaire d'au moins un des bras gauche et droit peut avantageusement remplacer les capteurs de mesure utilisés classiquement pour mesurer l'amplitude des mouvements, selon la direction d'excitation X, des premières masses d'inertie gauche et droite, et des deuxièmes masses d'inertie gauche et droite, respectivement. En particulier dans ce mode de réalisation, le contrôle du mouvement selon la direction d'excitation et la mesure du mouvement selon la direction de détection peuvent être contrôlés par une même unité de commande électronique, par exemple en multiplexant temporellement les deux voies.

### Exemple

Des simulations par éléments finis ont été réalisées.

Le gyromètre a été soumis à des vibrations extérieures, à des fréquences croissantes. Le comportement du gyromètre a été observé. Il est illustré pour certaines fréquences remarquables sur les figures 4 à 7.

La figure 6 illustre un premier mode de fonctionnement possible, dit « Drive équilibré utile», dans lequel
- les premier et deuxième gyromètres à double masse 5₁ et 5₂ sont chacun dans le mode en opposition de phase selon la direction d'excitation et selon la direction de détection,
- les première et deuxième masses d'inertie gauches sont en opposition de phase selon la direction d'excitation et selon la direction de détection, et
- les première et deuxième masses d'inertie droites sont en opposition de phase selon la direction d'excitation et selon la direction de détection.

La première masse d'inertie gauche est en phase avec la deuxième masse d'inertie droite. La deuxième masse d'inertie gauche est en phase avec la première masse d'inertie droite. L'ensemble constitué de la première masse d'inertie gauche et de la deuxième masse d'inertie droite est en opposition de phase avec l'ensemble constitué de la deuxième masse d'inertie gauche et de la première masse d'inertie droite.

Le mode mécanique est équilibré et est donc idéalement insensible aux vibrations extérieures, la fréquence des oscillations étant de 20,5 kHz. Le mode « Drive équilibré utile » est le mode de fonctionnement préféré. Il correspond au mode de fonctionnement « normal », en l'absence de vibrations extérieures.

La figure 5 illustre un deuxième mode de fonctionnement, dit « deuxième Drive équilibré», dans lequel
- les premier et deuxième gyromètres à double masse 5₁ et 5₂ sont chacun dans le mode en phase selon la direction d'excitation et selon la direction de détection,
- les première et deuxième masses d'inertie gauches sont en opposition de phase selon la direction de détection et selon la direction d'excitation,
- les première et deuxième masses d'inertie droites sont en opposition de phase selon la direction de détection et selon la direction d'excitation.

Le mode mécanique est équilibré, la fréquence des oscillations étant de 22,8 kHz. Il est idéalement insensible aux vibrations extérieures.

La figure 4 illustre un troisième mode de fonctionnement possible, dit « premier Drive équilibré », dans lequel
- les premier et deuxième gyromètres à double masse 5₁ et 5₂ sont chacun dans le mode en opposition de phase selon la direction de détection et selon la direction d'excitation,
- les première et deuxième masses d'inertie gauches sont en phase selon la direction de détection et selon la direction d'excitation, et
- les première et deuxième masses d'inertie droites sont en phase selon la direction de détection et selon la direction d'excitation.

Le mode mécanique est équilibré, la fréquence des oscillations étant de 46,3 kHz. Il est idéalement insensible aux vibrations extérieures.

La figure 7 illustre un quatrième mode de fonctionnement, dit « Drive sensible », dans lequel
- les premier et deuxième gyromètres à double masse 5₁ et 5₂ sont chacun dans le mode en phase selon la direction de détection et selon la direction d'excitation,
- les première et deuxième masses d'inertie gauches sont en opposition de phase selon la direction de détection et en phase selon la direction d'excitation, et
- les première et deuxième masses d'inertie droites sont en opposition de phase selon la direction de détection et en phase selon la direction d'excitation.

Le mode mécanique est déséquilibré. Le mode d'oscillation en phase des premier et deuxième gyromètres à double masse 5₁ et 5₂ selon la direction d'excitation peut ainsi être activé par des vibrations extérieures. En l'absence de bras, l'amplitude des oscillations serait plusieurs ordres de grandeur plus élevée et la fréquence de résonance serait proche de 20 kHz dans la bande de fréquence des vibrations que l'on souhaite exclure. Selon l'invention, les bras gauche et droit permettent d'opposer les efforts produits par les forces inertielles résultant des vibrations extérieures et exercés sur les cadres des premières masses d'inertie gauche et droite, aux efforts correspondants exercés sur les cadres des deuxièmes masses d'inertie gauche et droite, respectivement. Les bras permettent avantageusement de s'opposer à l'activation de ce mode de fonctionnement sous l'effet de vibrations extérieures.

De manière remarquable, ce déséquilibre n'apparait qu'à une fréquence d'oscillation de 47,6 kHz grâce à la présence des bras gauche et droite qui apportent une raideur mécanique supplémentaire importante selon l'axe d'excitation, et qui s'opposent au mouvement du mode Une modification des caractéristiques mécaniques des bras, en particulier de la rigidité ou de la largeur des bras ou de la raideur des pivots de bras, permet cependant de repousser plus encore cette fréquence de déséquilibre.

Ces performances montrent qu'un gyromètre selon l'invention est bien adapté à un environnement vibratoire sévère, comme celui d'un moteur de véhicule automobile ou d'une machine-outil. La grande tolérance aux vibrations permet avantageusement une flexibilité supérieure pour l'emplacement du gyromètre dans sa position de service.

### Gyromètre à deux axes

L'invention n'est pas limitée à un gyromètre à un axe et s'étend à un gyromètre à deux axes, apte à mesurer des vitesses de rotation autour d'axes de rotation parallèles à deux directions prédéfinies.

La figure 10 illustre un gyromètre à deux axes selon l'invention, apte à mesurer des vitesses de rotation autour d'axes de rotation parallèles à la direction Y et/ou à la direction Z.

Le gyromètre selon ce mode de réalisation est similaire au gyromètre à un axe selon l'invention décrit précédemment, mais comporte un premier gyromètre à double masse 5₁ du type de celui des figures 8 et 9, et un deuxième gyromètre à double masse 5₂ du type de celui des figures 1 à 3.

En particulier, comme le gyromètre à un axe selon l'invention, il comporte des bras gauche 30_{g} et droit 30_{d} montés en rotation sur le substrat autour de pivots de bras gauche 35_{g} et de bras droit 35_{d}, respectivement, le bras gauche couplant mécaniquement les cadres de la première masse d'inertie gauche 12_{g1} et de la deuxième masse d'inertie gauche 12_{g2}, et le bras droit 30_{d} couplant mécaniquement les cadres de la première masse d'inertie droite 12_{d1} et de la deuxième masse d'inertie droite 12_{d2}.

### Gyromètre à deuxièmes masses d'inertie gauche et droite monoblocs

Dans le mode de réalisation préféré décrit ci-dessus, le bras gauche couple mécaniquement des premier et deuxième cadres gauches et le bras droit couple mécaniquement des premier et deuxième cadres droits, les deuxièmes cadres gauche et droit appartenant à un deuxième gyromètre à double masse.

Dans une variante illustrée sur la figure 12, les deuxièmes masses d'inertie gauche et droite n'appartiennent pas à un gyromètre à double masse, mais sont des masses monoblocs gauche et droite montées coulissantes le long d'un deuxième axe X₂ (correspondant au « deuxième axe d'excitation » du mode de réalisation dans lequel les deuxièmes masses d'inertie gauche et droite appartiennent à un deuxième gyromètre à double masse). De préférence, les deuxièmes masses d'inertie gauche et droite sont guidées par des ressorts de guidage de manière à ne pouvoir se déplacer qu'en coulissement suivant le deuxième axe.

Les deuxièmes masses monoblocs et les positions des pivots de bras sont de préférence déterminées de manière à former, avec les premières masses d'inertie, pour chaque bras, des « ensembles équilibrés », c'est-à-dire dans lesquels les moments de force exercés par la gravité, orientée selon la direction d'excitation, sur le bras droit par les première et deuxième masses d'inertie droites autour du pivot de bras droit se compensent mutuellement, et dans lesquels les moments de force exercés par la gravité, orientée selon la direction d'excitation, sur le bras gauche par les première et deuxième masses d'inertie gauches autour du pivot de bras gauche se compensent mutuellement.

Avantageusement, des deuxièmes masses d'inertie gauche et droite monoblocs permettent d'équilibrer les efforts produits par les vibrations sur le cadre des premières masses d'inertie gauche et droite. Ceci permet de conférer une plus grande symétrie à la structure mécanique.

Comme illustré sur la figure 13, un gyromètre selon l'invention peut comporter plusieurs ensembles de masses monoblocs gauche et droite. Dans chaque ensemble, les masses monoblocs gauche et droite sont couplées mécaniquement aux premiers cadres gauche et droit, respectivement, par des bras gauche et droit, respectivement.

De préférence, le gyromètre comporte exactement deux dits ensembles, de préférence disposés de manière symétrique par rapport au premier axe d'excitation X₁, comme sur la figure 13. Avantageusement, les dimensions des masses monoblocs gauches et droites et des bras gauches et droits peuvent être réduites.

Comme illustré sur les figures 14 et 15, les deuxièmes masses d'inertie gauche et droite monoblocs d'un ensemble peuvent être couplées par un deuxième ressort de couplage 14₂. Avantageusement, le deuxième ressort de couplage permet de remonter la fréquence de résonance du mode Drive de l'ensemble de la structure du gyromètre à un niveau comparable à celui de la structure sans les deuxièmes masses d'inertie gauche et droite. Ce ressort de couplage offre un degré de liberté supplémentaire pour le couplage gauche et droite.

Comme cela apparaît clairement à présent, un gyromètre selon l'invention présente une résistance aux vibrations remarquable. Par ailleurs, il est compact, fiable, notamment grâce à l'utilisation de capteurs piezorésistifs, et présente une sensibilité améliorée.

Un gyromètre à un axe selon l'invention permet en particulier une double mesure d'une vitesse de rotation.

Bien entendu, l'invention n'est pas limitée aux modes de réalisation décrits et représentés, fournis à des fins illustratives seulement.

En particulier, d'autres techniques connues pour limiter l'effet des vibrations extérieures peuvent être mises en oeuvre, en complément de l'invention.

Les premier et deuxième gyromètres à double masse d'un gyromètre à un axe selon l'invention pourraient être du type des figures 8 et 9.

Au moins un ressort de couplage doit être prévu entre les premières masses d'inertie gauche et droite ou entre les deuxièmes masses d'inertie gauche et droite. La présence simultanée d'un premier ressort de couplage entre les premières masses d'inertie gauche et droite et d'un deuxième ressort de couplage entre les deuxièmes masses d'inertie gauche et droite est optionnelle.

## Revendications

1. Gyromètre comportant :
1) un premier gyromètre à double masse (5₁) comportant
- un substrat (10) plan,
- des premières masses d'inertie gauche (12_{g1}) et droite (12_{d1}) comportant :
- des premiers cadres gauche (12_{g1}') et droit (12_{d1}'), respectivement, alignés selon un premier axe d'excitation X₁ parallèle à une direction d'excitation (X), et montés coulissants sur le substrat suivant ledit premier axe d'excitation X₁, et
- des premières masses centrales gauche (12_{g1}") et droite (12_{d1}"), respectivement, montées coulissantes dans les premiers cadres gauche (12_{g1}') et droit (12_{d1}'), respectivement, parallèlement à une première direction de détection (Y ; Z) perpendiculaire à la direction d'excitation (X) ;
- un premier actionneur (17₁) de mise en oscillation, selon la direction d'excitation (X), des premières masses d'inertie gauche (12_{g1}) et droite (12_{d1}), et du premier ressort de couplage (14₁) ;
- une première bascule (20₁) montée en rotation sur le substrat (10) autour d'un premier pivot de bascule (22₁), les extrémités gauche et droite de la première bascule étant reliées aux premières masses centrales gauche (12_{g1}") et droite (12_{d1}"), respectivement ; et
- un premier détecteur (24₁) de la position angulaire de la première bascule autour du premier pivot de bascule ;
2) des deuxièmes masses d'inertie gauche (12_{g2}) et droite (12_{d2}) alignées selon un deuxième axe X₂ parallèle à ladite direction d'excitation (X), et montées coulissantes sur le substrat suivant le deuxième axe X₂ ;
le gyromètre comportant des bras gauche (30_{g}) et droit (30_{d}), montés en rotation sur le substrat autour de pivots de bras gauche (35g) et de bras droit (35d), respectivement, d'axes perpendiculaires au substrat,
le bras gauche couplant mécaniquement le premier cadre gauche (12_{g1}') avec la deuxième masse d'inertie gauche (12_{g2}), et le bras droit (30_{d}) couplant mécaniquement le premier cadre droit (12_{d1}') avec la deuxième masse d'inertie droite (12_{d2}') ;
un premier ressort de couplage (14₁) étant interposé entre lesdits premiers cadres gauche (12_{g1}') et droit (12_{d1}') et/ou un deuxième ressort de couplage (14₂) étant interposé entre lesdites deuxièmes masses d'inertie gauche (12_{g2}) et droite (12_{d2}).

2. Gyromètre selon la revendication précédente, comportant un dit premier ressort de couplage (14₁) et un dit deuxième ressort de couplage (14₂).

3. Gyromètre selon l'une quelconque des revendications précédentes, dans lequel la première direction de détection (Y) est parallèle au plan défini par le premier axe d'excitation X₁ et par le deuxième axe X₂, ainsi qu'au plan du substrat.

4. Gyromètre selon l'une quelconque des revendications précédentes, dans lequel
- la première masse d'inertie gauche est couplée mécaniquement avec la deuxième masse d'inertie gauche exclusivement au moyen du bras gauche, et
- la première masse d'inertie droite est couplée mécaniquement avec la deuxième masse d'inertie droite exclusivement au moyen du bras droit.

5. Gyromètre selon l'une quelconque des revendications précédentes, dans lequel ledit premier détecteur comporte une jauge de contrainte piezorésistive ou une jauge capacitive.

6. Gyromètre selon la revendication immédiatement précédente, dans lequel ladite jauge comporte au moins un nanofil reliant la première bascule et au substrat, la distance entre un point de connexion mécanique dudit nanofil à la première bascule et ledit premier pivot de bascule étant inférieure à 100 microns, ou reliant au substrat au moins un des bras gauche et droit.

7. Gyromètre selon l'une quelconque des revendications précédentes, dans lequel les bras gauche et droit sont conformés de manière que la fréquence de résonnance (f_{Da}) à laquelle l'ensemble des premières et deuxièmes masses d'inertie gauches (12_{g1}, 12_{g2}) oscille, selon la direction d'excitation (X), en opposition de phase avec l'ensemble des premières et deuxièmes masses d'inertie droites (12_{d1} 12_{d2}), est différente de l'une quelconque des fréquences de résonnance des premières masses centrales, selon la première direction de détection (Y).

8. Gyromètre selon la revendication précédente, dans lequel ladite différence est supérieure à 1 kHz.

9. Gyromètre selon l'une quelconque des revendications précédentes, dans lequel la position du pivot de bras gauche (35_{g}) le long du bras gauche est déterminée de manière que les moments de force exercés par la gravité, orientée selon la direction d'excitation, sur le bras gauche par les première et deuxième masses d'inertie gauche autour du pivot de bras gauche (35_{g}) se compensent mutuellement.

10. Gyromètre selon l'une quelconque des revendications précédentes, dans lequel le bras gauche (30_{g}) et/ou le bras droit (30_{d}) présente(nt) :
- une longueur (L₃₀) supérieure à 100 microns et inférieure à 2000 microns ; et/ou
- une largeur (l₃₀) supérieure à 10 microns et inférieure à 50 microns, et/ou
- un rapport de forme égal au rapport longueur (L₃₀) / largeur (l₃₀) supérieur à 5 et inférieur à 30.

11. Gyromètre selon l'une quelconque des revendications 2 à 10, comportant un deuxième gyromètre à double masse comportant :
- ledit substrat (10),
- lesdites deuxièmes masses d'inertie gauche (12_{g2}) et droite (12_{d2}), lesdites deuxièmes masses d'inertie gauche (12_{g2}) et droite (12_{d2}) comportant :
- des deuxièmes cadres gauche (12_{g2}') et droit (12_{d2}'), respectivement, alignés selon le deuxième axe, dit « deuxième axe d'excitation » X₂, et montés coulissants sur le substrat suivant le deuxième axe d'excitation X₂, et
- des deuxièmes masses centrales gauche (12_{g2}") et droite (12_{d2}"), respectivement, montées coulissantes dans les deuxièmes cadres gauche (12_{g2}') et droit (12_{d2}'), respectivement, parallèlement à une deuxième direction de détection (Y ; Z), identique ou différente de la première direction de détection (Y) ;
- ledit deuxième ressort de couplage (14₂), interposé entre lesdits deuxièmes cadres gauche (12_{g2}') et droit (12_{d2}') ;
- un deuxième actionneur (17₂) de mise en oscillation, selon la direction d'excitation (X), des deuxièmes masses d'inertie gauche (12_{g2}) et droite (12_{d2}), et du deuxième ressort de couplage (14₂), le deuxième actionneur étant identique ou différent du premier actionneur ;
- une deuxième bascule (20₂) montée en rotation sur le substrat (10) autour d'un deuxième pivot de bascule (22₂), les extrémités gauche et droite de la deuxième bascule étant reliées aux deuxièmes masses centrales gauche (12_{g2}") et droite (12_{d2}"), respectivement ; et
- un deuxième détecteur (24₂) de la position angulaire de la deuxième bascule autour du deuxième pivot de bascule,
- le deuxième gyromètre à double masse étant de préférence identique au premier gyromètre à double masse ; et/ou
- les bras gauche et droit étant de préférence identiques, et/ou
- le bras gauche étant de préférence monté en rotation sur les premier et deuxième cadres gauches, autour de premier et deuxième axes de rotation gauches (33_{g1},33_{g2}) perpendiculaires à la direction d'excitation, respectivement, et/ou
- le bras droit étant de préférence monté en rotation sur les premier et deuxième cadres droits, autour de premier et deuxième axes de rotation droits (33_{d1},33_{d2}) perpendiculaires à la direction d'excitation, respectivement.

12. Gyromètre selon la revendication immédiatement précédente, comportant un module de commande (26) comportant un circuit à boucle de verrouillage de phase configuré pour commander les premier et deuxième actionneurs, et/ou dans lequel les première et deuxième direction de détection sont identiques,
le premier détecteur (24₁) est configuré pour fournir une première mesure d'une rotation de la première bascule autour du premier pivot de bascule,
le deuxième détecteur (24₂) est configuré pour fournir une deuxième mesure d'une rotation de la deuxième bascule autour du deuxième pivot de bascule,
le gyromètre comportant un module configuré pour fournir un signal en fonction des première et deuxième mesures.

13. Gyromètre selon l'une quelconque des revendications 1 à 11, dans lequel chacune des deuxièmes masses d'inertie gauche (12_{g2}) et droite (12_{d2}) est monobloc.

14. Gyromètre selon l'une quelconque des revendications précédentes, comportant
- plusieurs ensembles comportant chacun desdites deuxièmes masses d'inertie gauche (12_{g2}) et droite (12_{d2}) respectives, alignées selon un dit deuxième axe respectif, parallèle à ladite direction d'excitation (X), et montées coulissantes sur le substrat suivant ledit deuxième axe respectif; et
- pour chaque dit ensemble, des bras gauche (30_{g}) et droit (30_{d}) respectifs, montés en rotation sur le substrat autour de pivots de bras gauche (35g) et de bras droit (35d), respectivement, d'axes perpendiculaires au substrat,
le bras gauche couplant mécaniquement le premier cadre gauche (12_{g1}') avec la deuxième masse d'inertie gauche (12_{g2}) respective, et le bras droit (30_{d}) couplant mécaniquement le premier cadre droit (12_{d1}') avec la deuxième masse d'inertie droite (12_{d2}') respective,
gyromètre dans lequel, de préférence, pour chaque dit ensemble, chacune des deuxièmes masses d'inertie gauche (12_{g2}) et droite (12_{d2}) est monobloc.

15. Utilisation d'un gyromètre selon l'une quelconque des revendications précédentes, dans un environnement dans lequel il est susceptible d'être soumis à des vibrations extérieures à une fréquence de 40 kHz, sous 10 g.

## Patentansprüche

1. Gyrometer, umfassend:
1) ein erstes Zweimassengyrometer (5₁), umfassend
- ein ebenes Substrat (10),
- eine erste linke (12_{g1}) und rechte (12_{d1}) Trägheitsmasse, umfassend:
- einen ersten linken (12_{g1}') bzw. rechten (12_{d1}') Rahmen, die gemäß einer ersten Anregungsachse X₁, die zu einer Anregungsrichtung (X) parallel ist, ausgerichtet sind und gemäß der ersten Anregungsachse X₁ gleitend auf dem Substrat montiert sind, und
- eine erste linke (12_{g1}") bzw. rechte (12_{d1}") zentrale Masse, die parallel zu einer ersten Erfassungsrichtung (Y; Z), die zu der Anregungsrichtung (X) senkrecht ist, in dem ersten linken (12_{g1}') bzw. rechten (12_{d1}') Rahmen gleitend montiert sind;
- einen ersten Aktuator (17₁), um die erste linke (12_{g1}) und rechte (12_{d1}) Trägheitsmasse und die erste Kopplungsfeder (14₁) gemäß der Anregungsrichtung (X) in Oszillation zu versetzen;
- eine erste Wippe (20₁), die um einen ersten Wippendrehpunkt (22₁) drehend auf dem Substrat (10) montiert ist, wobei das linke und rechte Ende der ersten Wippe mit der ersten linken (12_{g1}") bzw. rechten (12_{d1}") zentralen Masse verbunden sind; und
- einen ersten Detektor (24₁) für die Winkelposition der ersten Wippe um den ersten Wippendrehpunkt;
2) eine zweite linke (12_{g2}) und rechte (12_{d2}) Trägheitsmasse, die gemäß einer zweiten Achse X₂, die zu der Anregungsrichtung (X) parallel ist, ausgerichtet sind und gemäß der zweiten Achse X₂ gleitend auf dem Substrat montiert sind;
wobei das Gyrometer einen linken (30_{g}) und rechten (30_{d}) Arm umfasst, die um einen Drehpunkt des linken Arms (35g) bzw. rechten Arms (35d) mit zu dem Substrat senkrecht verlaufenden Achsen drehend auf dem Substrat montiert sind,
wobei der linke Arm den ersten linken Rahmen (12_{g1}') mit der zweiten linken Trägheitsmasse (12_{g2}) mechanisch koppelt und der rechte Arm (30_{d}) den ersten rechten Rahmen (12_{d1}') mit der zweiten rechten Trägheitsmasse (12_{d2}') mechanisch koppelt;
wobei eine erste Kopplungsfeder (14₁) zwischen dem ersten linken (12_{g1}') und rechten (12_{d1}') Rahmen eingefügt ist und/oder wobei eine zweite Kopplungsfeder (14₂) zwischen der zweiten linken (12_{g2}) und rechten (12_{d2}) Trägheitsmasse eingefügt ist.

2. Gyrometer nach dem vorhergehenden Anspruch, umfassend eine solche erste Kopplungsfeder (14₁) und eine solche zweite Kopplungsfeder (14₂).

3. Gyrometer nach einem beliebigen der vorhergehenden Ansprüche, wobei die erste Erfassungsrichtung (Y) zu der durch die erste Anregungsachse X₁ und durch die zweite Achse X₂ definierte Ebene sowie zu der Ebene des Substrats parallel ist.

4. Gyrometer nach einem beliebigen der vorhergehenden Ansprüche, wobei
- die erste linke Trägheitsmasse mit der zweiten linken Trägheitsmasse ausschließlich über den linken Arm mechanisch gekoppelt ist und
- die erste rechte Trägheitsmasse mit der zweiten rechten Trägheitsmasse ausschließlich über den rechten Arm mechanisch gekoppelt ist.

5. Gyrometer nach einem beliebigen der vorhergehenden Ansprüche, wobei der erste Detektor ein piezoresistives Dehnungsmessgerät oder ein kapazitives Messgerät umfasst.

6. Gyrometer nach dem direkt vorhergehenden Anspruch, wobei das Messgerät mindestens einen Nanodraht umfasst, der die erste Wippe mit dem Substrat verbindet, wobei der Abstand zwischen einem mechanischen Verbindungspunkt des Nanodrahts mit der ersten Wippe und dem ersten Wippendrehpunkt weniger als 100 µm beträgt, oder mindestens einen von dem linken und rechten Arm mit dem Substrat verbindet.

7. Gyrometer nach einem beliebigen der vorhergehenden Ansprüche, wobei der linke und rechte Arm so ausgebildet sind, dass die Resonanzfrequenz (f_{Da}), mit der die Anordnung aus der ersten und zweiten linken Trägheitsmasse (12_{g1}, 12_{g2}) gemäß der Anregungsrichtung (X) gegenphasig zu der Anordnung aus der ersten und zweiten rechten Trägheitsmasse (12_{d1}, 12_{d2}) oszilliert, sich von einer beliebigen der Resonanzfrequenzen der ersten zentralen Massen gemäß der ersten Erfassungsrichtung (Y) unterscheidet.

8. Gyrometer nach dem vorhergehenden Anspruch, wobei der Unterschied mehr als 1 kHz beträgt.

9. Gyrometer nach einem beliebigen der vorhergehenden Ansprüche, wobei die Position des Drehpunkts des linken Arms (35_{g}) entlang des linken Arms so bestimmt wird, dass die Kraftmomente, die durch die Schwerkraft, die gemäß der Anregungsrichtung orientiert ist, durch die erste und zweite linke Trägheitsmasse um den Drehpunkt des linken Arms (35_{g}) auf den linken Arm ausgeübt werden, sich gegenseitig aufheben.

10. Gyrometer nach einem beliebigen der vorhergehenden Ansprüche, wobei der linke Arme (30_{g}) und/oder der rechte Arm (30_{d}) Folgendes aufweist/aufweisen:
- eine Länge (L₃₀), die mehr als 100 µm und weniger als 2000 µm beträgt; und/oder
- eine Breite (l₃₀), die mehr als 10 µm und weniger als 50 µm beträgt, und/oder
- ein Aspektverhältnis, das dem Verhältnis Länge (L₃₀) / Breite (l₃₀) entspricht, von größer als 5 und kleiner als 30.

11. Gyrometer nach einem beliebigen der Ansprüche 2 bis 10, umfassend ein zweites Zweimassengyrometer, umfassend:
- das Substrat (10),
- die zweite linke (12_{g2}) und rechte (12_{d2}) Trägheitsmasse, wobei die zweite linke (12_{g2}) und rechte (12_{d2}) Trägheitsmasse Folgendes umfassen:
- einen zweiten linken (12_{g2}) bzw. rechten (12_{d2}') Rahmen, die gemäß der zweiten Achse, die als "zweite Anregungsachse" X₂ bezeichnet wird, ausgerichtet sind und gemäß der zweiten Anregungsachse X₂ gleitend auf dem Substrat montiert sind, und
- eine zweite linke (12_{g2}") bzw. rechte (12_{d2}") zentrale Masse, die parallel zu einer zweiten Erfassungsrichtung (Y; Z), die zu der ersten Erfassungsrichtung (Y) identisch ist oder sich von dieser unterscheidet, in dem zweiten linken (12_{g2}') bzw. rechten (12_{d2}') Rahmen gleitend montiert sind;
- die zweite Kopplungsfeder (14₂), die zwischen dem zweiten linken (12_{g2}') und rechten (12_{d2}') Rahmen eingefügt ist;
- einen zweiten Aktuator (17₂), um die zweite linke (12_{g2}) und rechte (12_{d2}) Trägheitsmasse und die zweite Kopplungsfeder (14₂) gemäß der Anregungsrichtung (X) in Oszillation zu versetzen, wobei der zweite Aktuator zu dem ersten Aktuator identisch ist oder sich von diesem unterscheidet;
- eine zweite Wippe (20₂), die um einen zweiten Wippendrehpunkt (22₂) drehend auf dem Substrat (10) montiert ist, wobei das linke und rechte Ende der zweiten Wippe mit der zweiten linken (12_{g2}") bzw. rechten (12_{d2}") zentralen Masse verbunden sind; und
- einen zweiten Detektor (24₂) für die Winkelposition der zweiten Wippe um den zweiten Wippendrehpunkt;
- wobei das zweite Zweimassengyrometer vorzugsweise zu dem ersten Zweimassengyrometer identisch ist; und/oder
- wobei der linke und rechte Arm vorzugsweise identisch sind und/oder
- wobei der linke Arm vorzugsweise um eine erste bzw. zweite linke Drehachse (33_{g1}, 33_{g2}), die zu der Anregungsrichtung senkrecht sind, drehend an dem ersten und zweiten linken Rahmen montiert ist und/oder
- wobei der rechte Arm vorzugsweise um eine erste bzw. zweite rechte Drehachse (33_{d1}, 33_{d2}), die zu der Anregungsrichtung senkrecht sind, drehend an dem ersten und zweiten rechten Rahmen montiert ist.

12. Gyrometer nach dem direkt vorhergehenden Anspruch, umfassend ein Steuermodul (26), das eine Schaltung mit einer Phasenregelschleife umfasst, die dazu konfiguriert ist, den ersten und zweiten Aktuator zu steuern, und/oder wobei
die erste und zweite Erfassungsrichtung identisch sind, der erste Detektor (24₁) dazu konfiguriert ist, eine erste Messung einer Drehung der ersten Wippe um den ersten Wippendrehpunkt bereitzustellen,
der zweite Detektor (24₂) dazu konfiguriert ist, eine zweite Messung einer Drehung der zweiten Wippe um den zweiten Wippendrehpunkt bereitzustellen,
wobei das Gyrometer ein Modul umfasst, das dazu konfiguriert ist, in Abhängigkeit von der ersten und zweiten Messung ein Signal bereitzustellen.

13. Gyrometer nach einem beliebigen der Ansprüche 1 bis 11, wobei jede von der zweiten linken (12_{g2}) und rechten (12_{d2}) Trägheitsmasse einstückig ausgebildet ist.

14. Gyrometer nach einem beliebigen der vorhergehenden Ansprüche, umfassend
- mehrere Anordnungen, die jeweils eine zweite linke (12_{g2}) bzw. rechte (12_{d2}) Trägheitsmasse umfassen, die gemäß einer jeweiligen zweiten Achse, die zu der Anregungsachse (X) parallel ist, ausgerichtet sind und gemäß der jeweiligen zweiten Achse gleitend auf dem Substrat montiert sind; und
- für jede Anordnung, einen linken (30_{g}) bzw. rechten (30_{d}) Arm, die um einen Drehpunkt des linken Arms (35g) bzw. rechten Arms (35d) mit zu dem Substrat senkrecht verlaufenden Achsen drehend auf dem Substrat montiert sind,
wobei der linke Arm den ersten linken Rahmen (12_{g1}') mit der jeweiligen zweiten linken Trägheitsmasse (12_{g2}) mechanisch koppelt und der rechte Arm (30_{d}) den ersten rechten Rahmen (12_{d1}') mit der jeweiligen zweiten rechten Trägheitsmasse (12_{d2}') mechanisch koppelt,
wobei bei dem Gyrometer vorzugsweise bei jeder Anordnung jede der zweiten linken (12_{g2}) und rechten (12_{d2}) Trägheitsmasse einstückig ausgebildet ist.

15. Verwendung eines Gyrometers nach einem beliebigen der vorhergehenden Ansprüche in einer Umgebung, in der es externen Schwingungen mit einer Frequenz von 40 kHz, unter 10 g, ausgesetzt sein kann.

## Claims

1. Gyrometer comprising:
1) a first dual-mass gyrometer (5₁) comprising
- a planar substrate (10),
- first left (12_{g1}) and right (12_{d1}) inertial masses comprising:
- first left (12_{g1}') and right (12_{d1}') frames, respectively, aligned along a first excitation axis X₁ parallel to an excitation direction (X), and mounted with the ability to slide on the substrate along said first excitation axis X₁, and
- first left (12_{g1}") and right (12_{d1}") central masses, respectively, mounted with the ability to slide in the first left (12_{g1}') and right (12_{d1}') frames, respectively, parallel to a first detection direction (Y; Z) perpendicular to the excitation direction (X);
- a first oscillation-inducing actuator (17₁) inducing oscillation, in the excitation direction (X), of the first left (12_{g1}) and right (12_{d1}) inertial masses and of the first coupling spring (14₁);
- a first rocker (20₁) mounted with the ability to rotate on the substrate (10) about a first rocker pivot (22₁), the left and right ends of the first rocker being connected to the first left (12_{g1}") and right (12_{d1}") central masses, respectively; and
- a first detector (24₁) of the angular position of the first rocker about the first rocker pivot;
2) second left (12_{g2}) and right (12_{d2}) inertial masses aligned along a second axis X₂ parallel to said excitation direction (X), and mounted with the ability to slide on the substrate along the second axis X₂;
the gyrometer comprising left (30_{g}) and right (30_{d}) arms, mounted with the ability to rotate on the substrate about a left arm pivot (35g) and a right arm pivot (35d), respectively, having axes perpendicular to the substrate,
the left arm mechanically coupling the first left frame (12_{g1}') with the second left inertial mass (12_{g2}), and the right arm (30_{d}) mechanically coupling the first right frame (12_{d1}') with the second right inertial mass (12_{d2}');
a first coupling spring (14₁) being interposed between said first left (12_{g1}') and right (12_{d1}') frames and/or a second coupling spring (14₂) being interposed between said second left (12_{g2}) and right (12_{d2}) inertial masses.

2. Gyrometer according to the preceding claim, comprising a said first coupling spring (14₁) and a said second coupling spring (14₂).

3. Gyrometer according to any one of the preceding claims, wherein the first detection direction (Y) is parallel to the plane defined by the first excitation axis X₁ and by the second axis X₂, and to the plane of the substrate.

4. Gyrometer according to any one of the preceding claims, wherein
- the first left inertial mass is mechanically coupled to the second left inertial mass exclusively by means of the left arm, and
- the first right inertial mass is mechanically coupled to the second right inertial mass exclusively by means of the right arm.

5. Gyrometer according to any one of the preceding claims, wherein said first detector comprises a piezoresistive strain gage or a capacitive gage.

6. Gyrometer according to the immediately preceding claim, wherein said gage comprises at least one nanowire connecting the first rocker and to the substrate, the distance between a point of mechanical connection of said nanowire to the first rocker and said first rocker pivot being less than 100 microns, or connecting at least one of the left and right arms to the substrate.

7. Gyrometer according to any one of the preceding claims, wherein the left and right arms are shaped in such a way that the resonant frequency (f_{Da}) at which the assembly of the first and second left inertial masses (12_{g1}, 12_{g2}) oscillates, in the excitation direction (X), in phase-opposition with the assembly of the first and second right inertial masses (12_{d1}, 12_{d2}) is different than any one of the resonant frequencies of the first central masses, in the first detection direction (Y).

8. Gyrometer according to the preceding claim, wherein said difference is greater than 1 kHz.

9. Gyrometer according to any one of the preceding claims, wherein the position of the left arm pivot (35_{g}) along the left arm is determined in such a way that the moments of force exerted by gravity, oriented in the excitation direction, on the left arm by the first and second left inertial masses about the left arm pivot (35_{g}) compensate one another.

10. Gyrometer according to any one of the preceding claims, wherein the left arm (30_{g}) and/or the right arm (30_{d}) has/have:
- a length (L₃₀) greater than 100 microns and less than 2000 microns; and/or
- a width (l₃₀) greater than 10 microns and less than 50 microns, and/or
- an aspect ratio equal to the ratio length (L₃₀) / width (l₃₀) greater than 5 and less than 30.

11. Gyrometer according to any one of claims 2 to 10, comprising a second dual-mass gyrometer comprising:
- said substrate (10),
- said second left (12_{g2}) and right (12_{d2}) inertial masses, said second left (12_{g2}) and right (12_{d2}) inertial masses comprising:
- second left (12_{g2}') and right (12_{d2}') frames, respectively, aligned along the second axis known as "second excitation axis" X₂, and mounted with the ability to slide on the substrate along the second excitation axis X₂, and
- second left (12_{g2}") and right (12_{d2}") central masses, respectively, mounted with the ability to slide in the second left (12_{g2}') and right (12_{d2}') frames, respectively, parallel to a second detection direction (Y; Z), identical to or different than the first detection direction (Y);
- said second coupling spring (14₂), interposed between said second left (12_{g2}') and right (12_{d2}') frames;
- a second oscillation-inducing actuator (17₂) inducing oscillation, in the excitation direction (X), of the second left (12_{g2}) and right (12_{d2}) inertial masses and of the second coupling spring (14₂), the second actuator being identical to or different than the first actuator;
- a second rocker (20₂) mounted with the ability to rotate on the substrate (10) about a second rocker pivot (22₂), the left and right ends of the second rocker being connected to the second left (12_{g2}") and right (12_{d2}") central masses respectively; and
- a second detector (24₂) of the angular position of the second rocker about the second rocker pivot,
- the second dual-mass gyrometer being preferably identical to the first dual-mass gyrometer; and/or
- the left and right arms being preferably identical, and/or
- the left arm being preferably mounted with the ability to rotate on the first and second left frames, about first and second left axes of rotation (33_{g1},33_{g2}) which are perpendicular to the excitation direction, respectively, and/or
- the right arm being preferably mounted with the ability to rotate on the first and second right frames, about first and second right axes of rotation (33_{d1},33_{d2}) which are perpendicular to the excitation direction, respectively.

12. Gyrometer according to the immediately preceding claim, comprising a control module (26) comprising a phase-locked loop circuit configured to control the first and second actuators, and/or wherein
the first and second detection directions are identical,
the first detector (24₁) is configured to provide a first measurement of a rotation of the first rocker about the first rocker pivot,
the second detector (24₂) is configured to provide a second measurement of a rotation of the second rocker about the second rocker pivot,
the gyrometer comprising a module configured to provide a signal on the basis of the first and second measurements.

13. Gyrometer according to any one of claims 1 to 11, wherein each of the second left (12_{g2}) and right (12_{d2}) inertial masses is a monobloc mass.

14. Gyrometer according to any one of the preceding claims, comprising
- several assemblies each comprising said second left (12_{g2}) and right (12_{d2}) inertial masses respectively, aligned along a respective so-called second axis, parallel to said excitation direction (X), and mounted with the ability to slide on the substrate along said respective second axis; and
- for each said assembly, respective left (30_{g}) and right (30_{d}) arms, mounted with the ability to rotate on the substrate about left arm (35g) and right arm (35d) pivots respectively, having axes perpendicular to the substrate,
the left arm mechanically coupling the first left frame (12_{g1}') to the respective second left inertial mass (12_{g2}), and the right arm (30_{d}) mechanically coupling the first right frame (12_{d1}') to the respective second right inertial mass (12_{d2}'),
gyrometer wherein, preferably, for each said assembly, each of the second left (12_{g2}) and right (12_{d2}) inertial masses is a monobloc mass.

15. Use of a gyrometer according to any one of the preceding claims, in an environment in which it is liable to be subjected to external vibrations at a frequency of 40 kHz under 10 g.
